(19) Europäisches Patentamt
European Patent Office
Office européen des brevets

(11) EP 3 608 362 A1

# (12) EUROPEAN PATENT APPLICATION

published in accordance with Art. 153(4) EPC

(43) Date of publication:
**12.02.2020 Bulletin 2020/07**

(21) Application number: **18780589.0**

(22) Date of filing: **02.04.2018**

(51) Int Cl.:
***C08L 7/00*** *(2006.01)* ***B60C 1/00*** *(2006.01)*
***C08C 19/25*** *(2006.01)* ***C08L 15/00*** *(2006.01)*
***C08L 101/00*** *(2006.01)*

(86) International application number:
**PCT/JP2018/014164**

(87) International publication number:
**WO 2018/186367 (11.10.2018 Gazette 2018/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2017 JP 2017076321**

(71) Applicant: **Bridgestone Corporation**
**Tokyo 104-8340 (JP)**

(72) Inventors:
- **TAKANO, Kosuke**
  **Tokyo 104-8340 (JP)**
- **OGASAWARA, Takuya**
  **Tokyo 104-8340 (JP)**
- **TSUJI, Takanori**
  **Tokyo 104-8340 (JP)**

(74) Representative: **Oxley, Robin John George**
**Marks & Clerk LLP**
**15 Fetter Lane**
**London EC4A 1BW (GB)**

## (54) RUBBER COMPOSITION AND TIRE

(57) Provided is a rubber composition capable of highly achieving all of wet performance, low rolling resistance, and steering stability on a dry road surface of a tire. A rubber composition comprises: a rubber component (A) containing natural rubber (A1) and a modified conjugated diene-based polymer (A2); and a thermoplastic resin (B), wherein a content of the natural rubber (A1) in the rubber component (A) is 30 mass% or more, and the modified conjugated diene-based polymer (A2) has a weight-average molecular weight of $20 \times 10^4$ or more and $300 \times 10^4$ or less, contains 0.25 mass% or more and 30 mass% or less of a modified conjugated diene-based polymer having a molecular weight of $200 \times 10^4$ or more and $500 \times 10^4$ or less with respect to a total amount of the modified conjugated diene-based polymer (A2), and has a contracting factor (g') of less than 0.64.

EP 3 608 362 A1

## Description

TECHNICAL FIELD

The present disclosure relates to a rubber composition and a tire.

BACKGROUND

For enhanced vehicle safety, various studies are conventionally conducted to improve the braking performance and driving performance of tires not only on a dry road surface but also on a wet road surface.
For example, a technique whereby a rubber composition that contains aromatic oil together with a rubber component such as natural rubber (NR) or butadiene rubber (BR) is used in tread rubber to improve performance on a wet road surface is known (PTL 1 listed below).
A technique whereby a rubber composition that contains a rubber component containing natural rubber and/or polyisoprene rubber in a total amount of 30 mass% or more and contains 5 parts to 50 parts by mass of a Cs-based resin with respect to 100 parts by mass of the rubber component is used in tread rubber to improve gripping performance on a wet road surface is also known (PTL 2 listed below).
A technique whereby a rubber composition that contains a rubber component containing 70 mass% or more of natural rubber and contains 5 parts to 50 parts by mass of a thermoplastic resin and 20 parts to 120 parts by mass of a silica-containing filler with respect to 100 parts by mass of the rubber component where the content of the silica in the filler is 50 mass% to 100 mass% is used in tread rubber to improve braking performance on a dry road surface and a wet road surface is also known (PTL 3 listed below).

CITATION LIST

Patent Literatures

PTL 1: JP H5-269884 A
PTL 2: JP 2009-256540 A
PTL 3: WO 2015/079703 A1

SUMMARY

(Technical Problem)

In response to global moves to regulate carbon dioxide emissions with the increased interest in environmental problems in recent years, demand to improve the fuel efficiency of automobiles is growing. To meet such demand, regarding tire performance, reduction in rolling resistance is required.
Our studies revealed that, with the techniques disclosed in PTL 1 and PTL 2, it is difficult to achieve both improvement in tire gripping performance on a wet road surface (hereafter simply referred to as "wet performance") and reduction in tire rolling resistance (improvement in low loss property) at high level.
Meanwhile, our studies revealed that, with the technique disclosed in PTL 3, it is possible to achieve both improvement in tire wet performance and reduction in tire rolling resistance.
However, a tire having further improved performance is demanded as a next-generation tire, and it is necessary to achieve both wet performance and low rolling resistance at higher level than the tire disclosed in PTL 3 and also ensure sufficient steering stability on a dry road surface.
It could therefore be helpful to provide a rubber composition capable of highly achieving all of wet performance, low rolling resistance, and steering stability on a dry road surface of a tire.
It could also be helpful to provide a tire that highly achieves all of wet performance, low rolling resistance, and steering stability on a dry road surface.

(Solution to Problem)

We thus provide the following.
A rubber composition according to the present disclosure comprises:

a rubber component (A) containing natural rubber (A1) and a modified conjugated diene-based polymer (A2); and a thermoplastic resin (B),

wherein a content of the natural rubber (A1) in the rubber component (A) is 30 mass% or more, and

the modified conjugated diene-based polymer (A2) has a weight-average molecular weight of $20 \times 10^4$ or more and $300 \times 10^4$ or less, contains 0.25 mass% or more and 30 mass% or less of a modified conjugated diene-based polymer having a molecular weight of $200 \times 10^4$ or more and $500 \times 10^4$ or less with respect to a total amount of the modified conjugated diene-based polymer (A2), and has a contracting factor (g') of less than 0.64.

As a result of using the rubber composition according to the present disclosure in a tire, all of the wet performance, low rolling resistance, and steering stability on a dry road surface of the tire can be highly achieved.

In the present disclosure, the weight-average molecular weight, the content of the modified conjugated diene-based polymer having a molecular weight of $200 \times 10^4$ or more and $500 \times 10^4$ or less, and the contracting factor (g') of the modified conjugated diene-based polymer (A2) are measured by the methods described in the EXAMPLES section below.

Preferably, in the rubber composition according to the present disclosure, the modified conjugated diene-based polymer (A2) has a branch with a branching degree of 5 or more. As a result of using such a rubber composition in a tire, the wet performance of the tire can be further improved.

Preferably, in the rubber composition according to the present disclosure, the modified conjugated diene-based polymer (A2) has one or more coupling residual groups and conjugated diene-based polymer chains that bind to the coupling residual groups, and the branch includes a branch in which five or more conjugated diene-based polymer chains bind to one coupling residual group. As a result of using such a rubber composition in a tire, the wet performance of the tire can be further improved.

Preferably, in the rubber composition according to the present disclosure, the modified conjugated diene-based polymer (A2) is represented by the following General Formula (I):

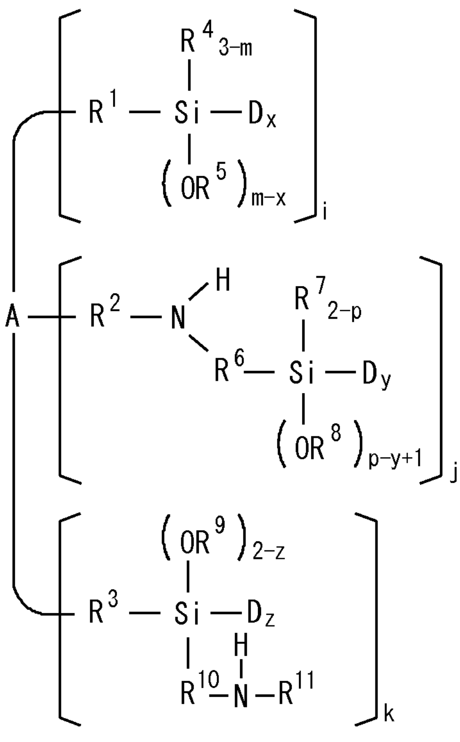

· · · · (I)

where D represents a conjugated diene-based polymer chain, $R^1$, $R^2$, and $R^3$ each independently represent a single bond or an alkylene group with a carbon number of 1 to 20, $R^4$ and $R^7$ each independently represent an alkyl group with a carbon number of 1 to 20, $R^5$, $R^8$, and $R^9$ each independently represent a hydrogen atom or an alkyl group with a carbon number of 1 to 20, $R^6$ and $R^{10}$ each independently represent an alkylene group with a carbon number of 1 to 20, $R^{11}$ represents a hydrogen atom or an alkyl group with a carbon number of 1 to 20, m and x each independently represent an integer of 1 to 3 where $x \le m$, p represents 1 or 2, y represents an integer of 1 to 3 where $y \le (p + 1)$, z represents an integer of 1 or 2, a plurality of each of D, $R^1$ to $R^{11}$, m, p, x, y, and z, if present, are each independent, i represents an integer of 0 to 6, j represents an integer of 0 to 6, k represents an integer of 0 to 6, (i + j + k) represents

an integer of 3 to 10, ((x × i) + (y × j) + (z × k)) represents an integer of 5 to 30, and A represents a hydrocarbon group or an organic group containing at least one atom selected from the group consisting of an oxygen atom, a nitrogen atom, a silicon atom, a sulfur atom, and a phosphorus atom and not containing active hydrogen, with a carbon number of 1 to 20. As a result of using such a rubber composition in a tire, the wear resistance performance of the tire can be improved.

Preferably, in the General Formula (I), A is represented by any of the following General Formulas (II) to (V):

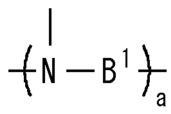

· · · · (II)

where $B^1$ represents a single bond or a hydrocarbon group with a carbon number of 1 to 20, a represents an integer of 1 to 10, and a plurality of $B^1$, if present, are each independent,

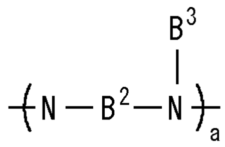

· · · · (III)

where $B^2$ represents a single bond or a hydrocarbon group with a carbon number of 1 to 20, $B^3$ represents an alkyl group with a carbon number of 1 to 20, a represents an integer of 1 to 10, a plurality of $B^2$, if present, are each independent, and a plurality of $B^3$, if present, are each independent,

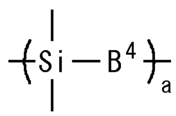

· · · · (IV)

where $B^4$ represents a single bond or a hydrocarbon group with a carbon number of 1 to 20, a represents an integer of 1 to 10, and a plurality of $B^4$, if present, are each independent,

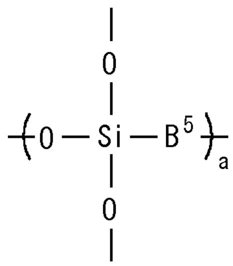

· · · · (V)

where $B^5$ represents a single bond or a hydrocarbon group with a carbon number of 1 to 20, a represents an integer of 1 to 10, and a plurality of $B^5$, if present, are each independent. As a result of using such a rubber composition in a tire, the low rolling resistance, wet performance, and wear resistance performance of the tire can be highly balanced.

Preferably, in the rubber composition according to the present disclosure, the modified conjugated diene-based polymer (A2) is obtained by reacting a conjugated diene-based polymer with a coupling agent represented by the following General Formula (VI):

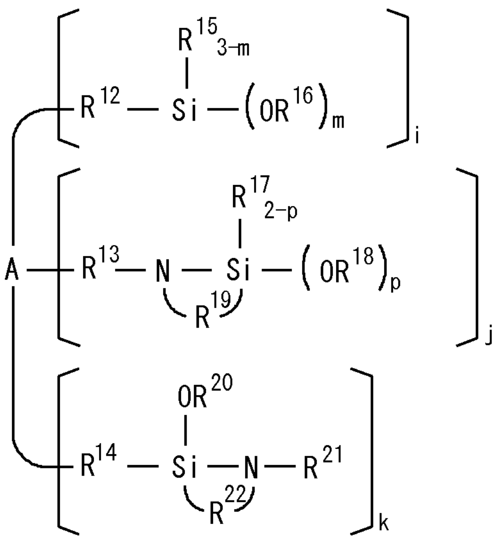

· · · · · (VI)

where $R^{12}$, $R^{13}$, and $R^{14}$ each independently represent a single bond or an alkylene group with a carbon number of 1 to 20, $R^{15}$, $R^{16}$, $R^{17}$, $R^{18}$, and $R^{20}$ each independently represent an alkyl group with a carbon number of 1 to 20, $R^{19}$ and $R^{22}$ each independently represent an alkylene group with a carbon number of 1 to 20, $R^{21}$ represents an alkyl group or a trialkyl silyl group with a carbon number of 1 to 20, m represents an integer of 1 to 3, p represents 1 or 2, a plurality of each of $R^{12}$ to $R^{22}$, m, and p, if present, are each independent, i, j, and k each independently represent an integer of 0 to 6 where (i + j + k) is an integer of 3 to 10, and A represents a hydrocarbon group or an organic group containing at least one atom selected from the group consisting of an oxygen atom, a nitrogen atom, a silicon atom, a sulfur atom, and a phosphorus atom and not containing active hydrogen, with a carbon number of 1 to 20. As a result of using such a rubber composition in a tire, the wear resistance performance of the tire can be improved.

Preferably, the coupling agent represented by the General Formula (VI) is at least one selected from the group consisting of tetrakis[3-(2,2-dimethoxy-1-aza-2-silacyclopentane)propyl] -1,3-propanediamine, tetrakis(3-trimethoxysilylpropyl)-1,3-propanediamine, and tetrakis(3-trimethoxysilylpropyl)-1,3-bisaminomethylcyclohexane. As a result of using such a rubber composition in a tire, the wear resistance performance of the tire can be further improved.

Preferably, in the rubber composition according to the present disclosure, a content of the thermoplastic resin (B) is 1 part to 50 parts by mass with respect to 100 parts by mass of the rubber component (A). As a result of using such a rubber composition in a tire, the wet performance of the tire can be further improved.

Preferably, in the rubber composition according to the present disclosure, the thermoplastic resin (B) is at least one selected from the group consisting of a Cs-based resin, a $C_5$/$C_9$-based resin, a $C_9$-based resin, a dicyclopentadiene resin, a rosin resin, and an alkylphenol resin. As a result of using such a rubber composition in a tire, the wet performance of the tire can be further improved.

Preferably, in the rubber composition according to the present disclosure, the modified conjugated diene-based polymer (A2) has a glass transition temperature (Tg) of more than -50°C, and the rubber component (A) further contains a modified conjugated diene-based polymer (A3) having a glass transition temperature (Tg) of -50°C or less. As a result of using such a rubber composition in a tire, the wear resistance performance of the tire can be improved.

In the present disclosure, the glass transition temperature (Tg) of each of the modified conjugated diene-based polymer (A2) and the modified conjugated diene-based polymer (A3) is measured by the method described in the EXAMPLES section below.

A tire according to the present disclosure comprises a tread rubber formed using the above-described rubber composition. The tire according to the present disclosure can highly achieve all of wet performance, low rolling resistance, and steering stability on a dry road surface.

(Advantageous Effect)

It is thus possible to provide a rubber composition capable of highly achieving all of wet performance, low rolling resistance, and steering stability on a dry road surface of a tire.

It is also possible to provide a tire that highly achieves all of wet performance, low rolling resistance, and steering stability on a dry road surface.

DETAILED DESCRIPTION

A rubber composition and a tire according to the present disclosure will be described in detail below, by way of embodiments.

<Rubber composition>

A rubber composition according to the present disclosure comprises: a rubber component (A) containing natural rubber (A1) and a modified conjugated diene-based polymer (A2); and a thermoplastic resin (B), wherein the content of the natural rubber (A1) in the rubber component (A) is 30 mass% or more, and the modified conjugated diene-based polymer (A2) has a weight-average molecular weight of $20 \times 10^4$ or more and $300 \times 10^4$ or less, contains 0.25 mass% or more and 30 mass% or less of a modified conjugated diene-based polymer having a molecular weight of $200 \times 10^4$ or more and $500 \times 10^4$ or less with respect to the total amount of the modified conjugated diene-based polymer, and has a contracting factor (g') of less than 0.64.

As a result of the content of the natural rubber (A1) in the rubber component (A) being 30 mass% or more in the rubber composition according to the present disclosure, the loss tangent (tanδ) at around the temperature during running (e.g. 60°C) decreases, and the rolling resistance of the tire using the rubber composition can be reduced.

As a result of using the modified conjugated diene-based polymer (A2) as the rubber component (A) in the rubber composition according to the present disclosure, the loss tangent (tanδ) at around 0°C can be improved. The loss tangent (tanδ) at around 0°C relates to the wet performance of the tire. As a result of the loss tangent (tanδ) at around 0°C being improved according to the present disclosure, the wet performance of the tire can be improved.

There is a problem in that improving the loss tangent (tanδ) at around 0°C causes degradation in low rolling resistance. An attempt to solve this problem by containing the natural rubber (A1) and the thermoplastic resin (B) typically causes a decrease in the elastic modulus of the rubber. This, however, can be prevented by using the modified conjugated diene-based polymer (A2), with it being possible to highly achieve all of steering stability, wear resistance performance, wet performance, and low rolling resistance.

The rubber component (A) in the rubber composition according to the present disclosure contains the natural rubber (A1) and the modified conjugated diene-based polymer (A2), and may further contain other rubber components.

The content of the natural rubber (A1) in the rubber component (A) is 30 mass% or more, preferably 30 mass% to 60 mass%, and further preferably 40 mass% to 60 mass%. If the content of the natural rubber (A1) in the rubber component (A) is less than 30 mass%, the rolling resistance of the tire cannot be reduced sufficiently.

The modified conjugated diene-based polymer (A2) has a weight-average molecular weight (Mw) of $20 \times 10^4$ or more and $300 \times 10^4$ or less, contains 0.25 mass% or more and 30 mass% or less of a modified conjugated diene-based polymer having a molecular weight of $200 \times 10^4$ or more and $500 \times 10^4$ or less with respect to the total amount of the modified conjugated diene-based polymer (A2), and has a contracting factor (g') of less than 0.64.

Typically, a branched polymer tends to have smaller molecular size than a linear polymer with the same absolute molecular weight. The contracting factor (g') is an index of the ratio of the size of the molecule to a linear polymer assumed to have the same absolute molecular weight. That is, the contracting factor (g') tends to be lower when the branching degree of the polymer is higher. In this embodiment, intrinsic viscosity is used as an index of the molecular size, and the linear polymer is assumed to be in accordance with a relational expression of intrinsic viscosity $[\eta] = -3.883M^{0.771}$. The contracting factor (g') of the modified conjugated diene-based polymer at each absolute molecular weight is calculated, and an average value of contracting factors (g') when the absolute molecular weight is $100 \times 10^4$ to $200 \times 10^4$ is taken to be the contracting factor (g') of the modified conjugated diene-based polymer. Herein, the "branch" is formed as a result of another polymer directly or indirectly binding to one polymer. The "branching degree" is the number of polymers directly or indirectly binding to each other for one branch. For example, in the case where the below-described five conjugated diene-based polymer chains indirectly bind to each other through the below-described coupling residual group, the branching degree is 5. The "coupling residual group" is a structural unit of a modified conjugated diene-based polymer that is bound to a conjugated diene-based polymer chain, and is, for example, a coupling agent-derived structural unit obtained by reacting the below-described conjugated diene-based polymer and coupling agent. The "conjugated diene-based polymer chain" is a structural unit of a modified conjugated diene-based polymer, and is, for example, a conjugated diene-based polymer-derived structural unit obtained by reacting the below-described conjugated diene-based polymer and coupling agent.

The contracting factor (g') is less than 0.64, preferably 0.63 or less, more preferably 0.60 or less, further preferably 0.59 or less, and still more preferably 0.57 or less. No lower limit is placed on the contracting factor (g'), and the contracting factor (g') may be less than or equal to a detection limit. The contracting factor (g') is preferably 0.30 or more, more preferably 0.33 or more, further preferably 0.35 or more, and still more preferably 0.45 or more. The use of the modified conjugated diene-based polymer (A2) whose contracting factor (g') is in this range improves the processability of the rubber composition.

Since the contracting factor (g') tends to depend on the branching degree, for example, the contracting factor (g') can be controlled using the branching degree as an index. Specifically, a modified conjugated diene-based polymer with a branching degree of 6 tends to have a contracting factor (g') of 0.59 or more and 0.63 or less, and a modified conjugated diene-based polymer with a branching degree of 8 tends to have a contracting factor (g') of 0.45 or more and 0.59 or less. The contracting factor (g') is measured by the method described in the EXAMPLES section below.

The modified conjugated diene-based polymer (A2) preferably has a branch with a branching degree of 5 or more. The modified conjugated diene-based polymer (A2) more preferably has one or more coupling residual groups and conjugated diene-based polymer chains that bind to the coupling residual groups, where the branch includes a branch in which five or more conjugated diene-based polymer chains bind to one coupling residual group. By determining the structure of the modified conjugated diene-based polymer so that the branching degree is 5 or more and the branch includes a branch in which five or more conjugated diene-based polymer chains bind to one coupling residual group, the contracting factor (g') can be limited to less than 0.64 more reliably. The number of conjugated diene-based polymer chains that bind to one coupling residual group can be determined from the value of the contracting factor (g').

The modified conjugated diene-based polymer (A2) more preferably has a branch with a branching degree of 6 or more. The modified conjugated diene-based polymer (A2) further preferably has one or more coupling residual groups and conjugated diene-based polymer chains that bind to the coupling residual groups, where the branch includes a branch in which six or more conjugated diene-based polymer chains bind to one coupling residual group. By determining the structure of the modified conjugated diene-based polymer so that the branching degree is 6 or more and the branch includes a branch in which six or more conjugated diene-based polymer chains bind to one coupling residual group, the contracting factor (g') can be limited to 0.63 or less.

The modified conjugated diene-based polymer (A2) further preferably has a branch with a branching degree of 7 or more, and still more preferably has a branch with a branching degree of 8 or more. No upper limit is placed on the branching degree, but the branching degree is preferably 18 or less. The modified conjugated diene-based polymer (A2) still more preferably has one or more coupling residual groups and conjugated diene-based polymer chains that bind to the coupling residual groups where the branch includes a branch in which seven or more conjugated diene-based polymer chains bind to one coupling residual group, and particularly preferably has one or more coupling residual groups and conjugated diene-based polymer chains that bind to the coupling residual groups where the branch includes a branch in which eight or more conjugated diene-based polymer chains bind to one coupling residual group. By determining the structure of the modified conjugated diene-based polymer so that the branching degree is 8 or more and the branch includes a branch in which eight or more conjugated diene-based polymer chains bind to one coupling residual group, the contracting factor (g') can be limited to 0.59 or less.

The modified conjugated diene-based polymer (A2) preferably contains a nitrogen atom and a silicon atom. In this case, the rubber composition has favorable processability. As a result of using such a rubber composition in a tire, the rolling resistance of the tire can be further reduced while improving its wet performance and wear resistance performance. Whether the modified conjugated diene-based polymer (A2) contains a nitrogen atom can be determined based on whether there is adsorption to a specific column by the method described in the EXAMPLES section below. Whether the modified conjugated diene-based polymer (A2) contains a silicon atom can be determined based on metal analysis by the method described in the EXAMPLES section below.

At least one end of a conjugated diene-based polymer chain preferably binds to a silicon atom of a coupling residual group. Ends of a plurality of conjugated diene-based polymer chains may bind to one silicon atom. An end of a conjugated diene-based polymer chain and an alkoxy group with a carbon number of 1 to 20 or hydroxyl group may bind to one silicon atom, as a result of which the one silicon atom forms an alkoxy silyl group with a carbon number of 1 to 20 or silanol group.

The modified conjugated diene-based copolymer (A2) may be an oil-extended polymer to which extender oil has been added. The modified conjugated diene-based copolymer (A2) may be non-oil-extended or oil-extended. From the viewpoint of wear resistance performance, the Mooney viscosity measured at 100°C is preferably 20 or more and 100 or less, and more preferably 30 or more and 80 or less. The Mooney viscosity is measured by the method described in the EXAMPLES section below.

The weight-average molecular weight (Mw) of the modified conjugated diene-based polymer (A2) is $20 \times 10^4$ or more and $300 \times 10^4$ or less, preferably $50 \times 10^4$ or more, more preferably $64 \times 10^4$ or more, and further preferably $80 \times 10^4$ or more. The weight-average molecular weight is preferably $250 \times 10^4$ or less, further preferably $180 \times 10^4$ or less, and still more preferably $150 \times 10^4$ or less. If the weight-average molecular weight is less than $20 \times 10^4$, it is impossible to highly achieve both low rolling resistance and wet performance of the tire. If the weight-average molecular weight is more than $300 \times 10^4$, the processability of the rubber composition decreases. The weight-average molecular weight of each of the modified conjugated diene-based polymer (A2) and the below-described conjugated diene-based polymer is measured by the method described in the EXAMPLES section below.

The modified conjugated diene-based polymer (A2) contains 0.25 mass% or more and 30 mass% or less of a modified conjugated diene-based polymer having a molecular weight of $200 \times 10^4$ or more and $500 \times 10^4$ or less

(hereafter also referred to as "specific high molecular weight component") with respect to the total amount (100 mass%) of the modified conjugated diene-based polymer. If the content of the specific high molecular weight component is less than 0.25 mass% or more than 30 mass%, it is impossible to highly achieve both low rolling resistance and wet performance of the tire.

The content of the specific high molecular weight component in the modified conjugated diene-based polymer (A2) is preferably 1.0 mass% or more, more preferably 1.4 mass% or more, further preferably 1.75 mass% or more, still more preferably 2.0 mass% or more, particularly preferably 2.15 mass% or more, and extremely preferably 2.5 mass% or more. The content of the specific high molecular weight component in the modified conjugated diene-based polymer (A2) is preferably 28 mass% or less, more preferably 25 mass% or less, further preferably 20 mass% or less, and still more preferably 18 mass% or less.

Herein, the "molecular weight" is a standard polystyrene-equivalent molecular weight obtained by gel permeation chromatography (GPC). To obtain the modified conjugated diene-based polymer (A2) having the content of the specific high molecular weight component in such a range, it is preferable to control the reaction conditions in the below-described polymerization step and reaction step. For example, in the polymerization step, the use amount of the below-described organomonolithium compound as a polymerization initiator may be adjusted. Moreover, in the polymerization step, a method using a residence time distribution may be used, i.e. the time distribution of growth reaction may be widened, in both continuous polymerization mode and batch polymerization mode.

The molecular weight distribution (Mw/Mn) of the modified conjugated diene-based polymer (A2) expressed by the ratio of the weight-average molecular weight (Mw) to the number-average molecular weight (Mn) is preferably 1.6 or more and 3.0 or less. If the molecular weight distribution of the modified conjugated diene-based polymer (A2) is in this range, the rubber composition has favorable processability.

The number-average molecular weight, the weight-average molecular weight, the molecular weight distribution, and the content of the specific high molecular weight component of each of the modified conjugated diene-based polymer (A2) and the below-described conjugated diene-based polymer are measured by the methods described in the EXAMPLES section below.

A method of producing the modified conjugated diene-based polymer (A2) is not limited, but preferably includes: a polymerization step of polymerizing at least a conjugated diene compound to obtain a conjugated diene-based polymer using an organomonolithium compound as a polymerization initiator; and a reaction step of reacting an active end of the conjugated diene-based polymer with a penta- or more functional reactive compound (hereafter also referred to as "coupling agent"). As the coupling agent, it is preferable to cause reaction with a penta- or more functional reactive compound containing a nitrogen atom and a silicon atom.

The modified conjugated diene-based polymer (A2) is preferably obtained by reacting a conjugated diene-based polymer with a coupling agent represented by the foregoing General Formula (VI). As a result of using the rubber composition containing the modified conjugated diene-based polymer (A2) obtained by reaction with the coupling agent in a tire, the wear resistance performance of the tire can be improved.

In General Formula (VI), $R^{12}$, $R^{13}$, and $R^{14}$ each independently represent a single bond or an alkylene group with a carbon number of 1 to 20, $R^{15}$, $R^{16}$, $R^{17}$, $R^{18}$, and $R^{20}$ each independently represent an alkyl group with a carbon number of 1 to 20, $R^{19}$ and $R^{22}$ each independently represent an alkylene group with a carbon number of 1 to 20, $R^{21}$ represents an alkyl group or a trialkyl silyl group with a carbon number of 1 to 20, m represents an integer of 1 to 3, p represents 1 or 2, a plurality of each of $R^{12}$ to $R^{22}$, m, and p, if present, are each independent, i, j, and k each independently represent an integer of 0 to 6 where (i + j + k) is an integer of 3 to 10, and A represents a hydrocarbon group or an organic group containing at least one atom selected from the group consisting of an oxygen atom, a nitrogen atom, a silicon atom, a sulfur atom, and a phosphorus atom and not containing active hydrogen, with a carbon number of 1 to 20.

In General Formula (VI), the hydrocarbon group represented by A encompasses saturated, unsaturated, aliphatic, and aromatic hydrocarbon groups. The organic group not containing active hydrogen is, for example, an organic group not containing a functional group having active hydrogen such as hydroxyl group (-OH), secondary amino group (>NH), primary amino group ($-NH_2$), and sulfhydryl group (-SH).

The polymerization step is preferably polymerization through growth reaction by living anion polymerization reaction. Thus, a conjugated diene-based polymer having an active end can be obtained, and therefore a modified diene-based polymer (A2) with a high modification rate can be obtained.

The conjugated diene-based polymer is obtained by polymerizing at least the conjugated diene compound, and is optionally obtained by copolymerizing the conjugated diene compound and a vinyl-substituted aromatic compound.

The conjugated diene compound is preferably a conjugated diene compound with a carbon number of 4 to 12, and more preferably a conjugated diene compound with a carbon number of 4 to 8. Examples of such a conjugated diene compound include 1,3-butadiene, isoprene, 2,3-dimethyl-1,3-butadiene, 1,3-pentadiene, 3-methyl-1,3-pentadiene, 1,3-hexadiene, and 1,3-heptadiene. Of these, 1,3-butadiene and isoprene are preferable from the viewpoint of industrial availability. One of these conjugated diene compounds may be used individually, or two or more of these conjugated diene compounds may be used together.

The vinyl-substituted aromatic compound is preferably a monovinyl aromatic compound. Examples of the monovinyl aromatic compound include styrene, p-methylstyrene, α-methylstyrene, vinyl ethyl benzene, vinyl xylene, vinyl naphthalene, and diphenyl ethylene. Of these, styrene is preferable from the viewpoint of industrial availability. One of these vinyl-substituted aromatic compounds may be used individually, or two or more of these vinyl-substituted aromatic compounds may be used together.

The use amount of the organomonolithium compound as a polymerization initiator is preferably determined depending on the target molecular weight of the conjugated diene-based polymer or modified conjugated diene-based polymer. The ratio of the use amount of a monomer such as the conjugated diene compound to the use amount of the polymerization initiator relates to the polymerization degree, that is, the number-average molecular weight and/or the weight-average molecular weight. Accordingly, in order to increase the molecular weight, adjustment may be made to reduce the amount of the polymerization initiator, and in order to reduce the molecular weight, adjustment may be made to increase the amount of the polymerization initiator.

The organomonolithium compound is preferably an alkyllithium compound from the viewpoint of industrial availability and controllability of polymerization reaction. Thus, a conjugated diene-based polymer having an alkyl group at a polymerization starting end can be obtained. Examples of the alkyllithium compound include n-butyllithium, sec-butyllithium, tert-butyllithium, n-hexyllithium, benzyllithium, phenyllithium, and stilbenelithium. From the viewpoint of industrial availability and controllability of polymerization reaction, the alkyllithium compound is preferably n-butyllithium or sec-butyllithium. One of these organomonolithium compounds may be used individually, or two or more of these organomonolithium compounds may be used together.

Examples of polymerization reaction modes that can be used in the polymerization step include batch and continuous polymerization reaction modes. In the continuous mode, one reactor or two or more connected reactors may be used. As a reactor for the continuous mode, for example, a tank or tubular reactor equipped with a stirrer is used. It is preferable, in the continuous mode, that a monomer, an inert solvent, and a polymerization initiator are continuously fed to the reactor, a polymer solution containing a polymer is obtained in the reactor, and the polymer solution is continuously discharged. As a reactor for the batch mode, for example, a tank reactor equipped with a stirrer is used. It is preferable, in the batch mode, that a monomer, an inert solvent, and a polymerization initiator are fed, the monomer is continuously or intermittently added during the polymerization if necessary, a polymer solution containing a polymer is obtained in the reactor, and the polymer solution is discharged after completing the polymerization. In this embodiment, the continuous mode in which a polymer can be continuously discharged to be supplied to the next reaction in a short period of time is preferable in order to obtain a conjugated diene-based polymer having an active end at a high ratio.

In the polymerization step, the polymerization is preferably performed in an inert solvent. Examples of the solvent include hydrocarbon-based solvents such as saturated hydrocarbon and aromatic hydrocarbon. Specific examples of the hydrocarbon-based solvent include aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons which are mixtures thereof. Allenes and acetylenes as impurities are preferably treated with an organic metal compound before the solvent is supplied to the polymerization reaction, because, in this way, a conjugated diene-based polymer having an active end in a high concentration tends to be obtained, and a modified conjugated diene-based polymer having a high modification rate tends to be obtained.

In the polymerization step, a polar compound may be added. By adding the polar compound, an aromatic vinyl compound can be randomly copolymerized with the conjugated diene compound. Moreover, there is a tendency that the polar compound can also be used as a vinylation agent for controlling the microstructure of the conjugated diene portion.

Examples of the polar compound include ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl) propane; tertiary amine compounds such as tetramethylethylenediamine, dipiperidinoethane, trimethylamine, triethylamine, pyridine, and quinuclidine; alkaline metal alkoxide compounds such as potassium-tert-amylate, potassium-tert-butylate, sodium-tert-butylate, and sodium amylate; and phosphine compounds such as triphenylphosphine. One of these polar compounds may be used individually, or two or more of these polar compounds may be used together.

In the polymerization step, the polymerization temperature is preferably 0°C or more, further preferably 120°C or less, and particularly preferably 50°C or more and 100°C or less, from the viewpoint of productivity. If the polymerization temperature is in this range, a sufficient reaction amount of the coupling agent for the active end after the polymerization end is likely to be ensured.

The amount of bound conjugated diene in the conjugated diene-based polymer or the modified conjugated diene-based polymer (A2) is not limited, but is preferably 40 mass% or more and 100 mass% or less, and more preferably 55 mass% or more and 80 mass% or less.

The amount of bound aromatic vinyl in the conjugated diene-based polymer or the modified conjugated diene-based polymer (A2) is not limited, but is preferably 0 mass% or more and 60 mass% or less, and more preferably 20

mass% or more and 45 mass% or less.

If the amount of bound conjugated diene and the amount of bound aromatic vinyl are in the respective ranges, low rolling resistance, wet performance, and wear resistance performance can be highly balanced when the rubber composition is used in a tire.

The amount of bound aromatic vinyl can be measured using ultraviolet absorption of a phenyl group, and, based on this, the amount of bound conjugated diene can be obtained. Specifically, these amounts are measured by the methods described in the EXAMPLES section below.

In the conjugated diene-based polymer or the modified conjugated diene-based polymer (A2), the vinyl bond content in a conjugated diene bond unit is not limited, but is preferably 10 mol% or more and 75 mol% or less, and more preferably 20 mol% or more and 65 mol% or less. If the vinyl bond content is in the foregoing range, low rolling resistance, wet performance, and wear resistance performance can be highly balanced when the rubber composition is used in a tire.

In the case where the modified conjugated diene-based polymer (A2) is a copolymer of butadiene and styrene, the vinyl bond content (1,2-bond content) in a butadiene bond unit can be obtained by Hampton method (R. R. Hampton, Analytical Chemistry, 21, 923 (1949)). Specifically, the vinyl bond content is measured by the method described in the EXAMPLES section below.

The glass transition temperature (Tg) of the modified conjugated diene-based polymer (A2) is preferably more than -50°C, and further preferably -45°C or more and -15°C or less. If the glass transition temperature (Tg) of the modified conjugated diene-based polymer (A2) is -45°C or more and -15°C or less, both low rolling resistance and wet performance can be more highly achieved when the rubber composition is used in a tire.

The glass transition temperature is defined as a peak top (inflection point) of a DSC differential curve obtained by recording a DSC curve during temperature increase in a predetermined temperature range in accordance with ISO 22768: 2006. Specifically, the glass transition temperature is measured by the method described in the EXAMPLES section below.

The reactive compound (coupling agent) is preferably a penta- or more functional reactive compound containing a nitrogen atom and a silicon atom, and preferably contains at least three silicon-containing functional groups. The coupling agent is more preferably a compound in which at least one silicon atom forms an alkoxy silyl group with a carbon number of 1 to 20 or silanol group, and further preferably a compound represented by the foregoing General Formula (VI).

The alkoxy silyl group of the coupling agent tends to react with, for example, the active end of the conjugated diene-based polymer to dissociate alkoxy lithium, thus forming a bond between an end of the conjugated diene-based polymer chain and silicon of the coupling residual group. A value obtained by subtracting the number of SiOR having become nonexistent through the reaction from the total number of SiOR contained in one molecule of the coupling agent corresponds to the number of alkoxy silyl groups contained in the coupling residual group. An azasila cycle group contained in the coupling agent forms a >N-Li bond and a bond between the end of the conjugated diene-based polymer and silicon of the coupling residual group. The >N-Li bond tends to easily change to >NH and LiOH with water or the like used in finishing. Moreover, in the coupling agent, an unreacted residual alkoxy silyl group tends to easily change to silanol (Si-OH group) with water or the like used in finishing.

The reaction temperature in the reaction step is preferably substantially equal to the polymerization temperature of the conjugated diene-based polymer, more preferably 0°C or more and 120°C or less, and further preferably 50°C or more and 100°C or less. The temperature change after the polymerization step until the addition of the coupling agent is preferably 10°C or less, and more preferably 5°C or less.

The reaction time in the reaction step is preferably 10 sec or more, and more preferably 30 sec or more. The time from the end of the polymerization step to the start of the reaction step is preferably shorter, from the viewpoint of the coupling rate. The time from the end of the polymerization step to the start of the reaction step is more preferably 5 min or less.

Mixing in the reaction step may be any of mechanical stirring, stirring with a static mixer, and the like. In the case where the polymerization step is in the continuous mode, the reaction step is preferably in the continuous mode, too. As a reactor used in the reaction step, for example, a tank or tubular reactor equipped with a stirrer is used. The coupling agent may be diluted with an inert solvent and continuously supplied to the reactor. In the case where the polymerization step is in the batch mode, the reaction step may be performed by a method of charging the polymerization reactor with the coupling agent, or a method of transferring the polymer to another reactor.

In General Formula (VI), A is preferably represented by any of the foregoing General Formulas (II) to (V). As a result of A being represented by any of the foregoing General Formulas (II) to (V), the modified conjugated diene-based polymer (A2) has better performance.

In General Formula (II), $B^1$ represents a single bond or a hydrocarbon group with a carbon number of 1 to 20, and a represents an integer of 1 to 10. A plurality of $B^1$, if present, are each independent.

In General Formula (III), $B^2$ represents a single bond or a hydrocarbon group with a carbon number of 1 to 20, $B^3$ represents an alkyl group with a carbon number of 1 to 20, and a represents an integer of 1 to 10. A plurality of $B^2$,

if present, are each independent. A plurality of $B^3$, if present, are each independent.

In General Formula (IV), $B^4$ represents a single bond or a hydrocarbon group with a carbon number of 1 to 20, and a represents an integer of 1 to 10. A plurality of $B^4$, if present, are each independent.

In General Formula (V), $B^5$ represents a single bond or a hydrocarbon group with a carbon number of 1 to 20, and a represents an integer of 1 to 10. A plurality of $B^5$, if present, are each independent.

For $B^1$, $B^2$, $B^4$, and $B^5$ in General Formulas (II) to (V), the hydrocarbon group with a carbon number of 1 to 20 is, for example, an alkylene group with a carbon number of 1 to 20.

Preferably, in General Formula (VI), A is represented by General Formula (II) or (III), and k represents 0.

More preferably, in General Formula (VI), A is represented by General Formula (II) or (III) and k represents 0, and, in General Formula (II) or (III), a represents an integer of 2 to 10.

Still more preferably, in General Formula (VI), A is represented by General Formula (II) and k represents 0, and, in General Formula (II), a represents an integer of 2 to 10.

Examples of such a coupling agent include bis(3-trimethoxysilylpropyl)

-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)

-[3-(2,2-dimethoxy-1-aza-2-silacyclopentane)propyl]-1,3-propanediamine, tetrakis[3-(2,2-dimethoxy-1-aza-2-silacyclopentane)propyl]

-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]

-(3-trismethoxysilylpropyl)-methyl-1,3-propanediamine. Of these, tetrakis[3-(2,2-dimethoxy-1-aza-2-silacyclopentane)propyl]

-1,3-propanediamine, tetrakis(3-trimethoxysilylpropyl)-1,3-propanediamine, and tetrakis(3-trimethoxysilylpropyl)-1,3-bisaminomethylcyclohexane are particularly preferable.

The addition amount of the compound represented by General Formula (VI) as the coupling agent can be adjusted so that the reaction is performed with the mole number ratio between the conjugated diene-based polymer and the coupling agent being set to a desired stoichiometric ratio. This is likely to achieve a desired branching degree. Specifically, the mole number of the polymerization initiator with respect to the mole number of the coupling agent is preferably 5.0-fold mole or more, and more preferably 6.0-fold mole or more. In this case, in General Formula (VI), the number of functional groups in the coupling agent ($(m - 1) \times i + p \times j + k$) is preferably an integer of 5 to 10, and more preferably an integer of 6 to 10.

To obtain the modified conjugated diene-based polymer (A2) containing the specific high molecular weight component, the molecular weight distribution (Mw/Mn) of the conjugated diene-based polymer is preferably 1.5 or more and 2.5 or less, and more preferably 1.8 or more and 2.2 or less. A single peak is preferably detected in the molecular weight curve of the resultant modified conjugated diene-based polymer (A2) obtained by GPC.

When the peak molecular weight of the modified conjugated diene-based polymer (A2) obtained by GPC is denoted by $Mp_1$ and the peak molecular weight of the conjugated diene-based polymer is denoted by $Mp_2$, the following formula preferably holds:

$$(Mp_1/Mp_2) < 1.8 \times 10 - 12 \times (Mp_2 - 120 \times 10^4)^2 + 2.$$

More preferably, $Mp_2$ is $20 \times 10^4$ or more and $80 \times 10^4$ or less, and $Mp_1$ is $30 \times 10^4$ or more and $150 \times 10^4$ or less. $Mp_1$ and $Mp_2$ are determined by the method described in the EXAMPLES section below.

The modification rate of the modified conjugated diene-based polymer (A2) is preferably 30 mass% or more, more preferably 50 mass% or more, and further preferably 70 mass% or more. If the modification rate is 30 mass% or more, when the rubber composition is used in a tire, the rolling resistance of the tire can be further reduced while improving the wear resistance performance of the tire. The modification rate is measured by the method described in the EXAMPLES section below.

After the reaction step, a deactivator, a neutralizer, and the like may be optionally added to the copolymer solution. Examples of the deactivator include, but are not limited to, water; and alcohols such as methanol, ethanol, and isopropanol. Examples of the neutralizer include, but are not limited to, carboxylic acids such as stearic acid, oleic acid, and versatic acid (a mixture of highly branched carboxylic acids with a carbon number of 9 to 11, mainly a carbon number of 10); and an aqueous solution of an inorganic acid, and a carbon dioxide gas.

From the viewpoint of preventing gel formation after the polymerization and improving stability in processing,

an antioxidant is preferably added to the modified conjugated diene-based polymer (A2). Examples of the antioxidant include 2,6-di-tert-butyl-4-hydroxytoluene (BHT), n-octadecyl-3-(4'-hydroxy-3',5'-di-tert-butylphenol)propionate, and 2-methyl-4,6-bis[(octylthio)methyl]phenol.

To further improve the processability of the modified conjugated diene-based polymer (A2), an extender oil may be optionally added to the modified conjugated diene-based copolymer. The method of adding an extender oil to the modified conjugated diene-based polymer is preferably, but is not limited to, a method by which an extender oil is added to the polymer solution and mixed, and the resultant oil-extended copolymer solution is desolvated. Examples of the extender oil include aromatic oil, naphthenic oil, and paraffinic oil. Of these, from the viewpoint of environmental safety, oil bleeding prevention, and wet performance, aroma-alternative oil containing 3 mass% or less of a polycyclic aromatic (PCA) component according to the IP 346 is preferable. Examples of the aroma-alternative oil include TDAE (Treated Distillate Aromatic Extracts), MES (Mild Extraction Solvate), and the like described in Kautschuk Gummi Kunststoffe 52 (12) 799 (1999), and RAE (Residual Aromatic Extracts). The addition amount of the extender oil is not limited, but is preferably 10 parts to 60 parts by mass and more preferably 20 parts to 37.5 parts by mass with respect to 100 parts by mass of the modified conjugated diene-based polymer (A2).

As the method of collecting the modified conjugated diene-based polymer (A2) from the polymer solution, any known method may be used. Examples of the method include a method by which the polymer is filtered off after separating the solvent by steam stripping and the resultant is dehydrated and dried to collect the polymer, a method by which the solution is concentrated in a flashing tank and the resultant is devolatilized by a vent extruder or the like, and a method by which the solution is directly devolatilized using a drum dryer or the like.

The modified conjugated diene-based polymer (A2) obtained by the reaction between the coupling agent represented by the foregoing General Formula (VI) and the conjugated diene-based polymer is, for example, represented by the foregoing General Formula (I).

In General Formula (I), D represents a conjugated diene-based polymer chain, and the weight-average molecular weight of the conjugated diene-based polymer chain is preferably $10 \times 10^4$ to $100 \times 10^4$. The conjugated diene-based polymer chain is a structural unit of the modified conjugated diene-based polymer, and is, for example, a conjugated diene-based polymer-derived structural unit obtained by the reaction between the conjugated diene-based polymer and the coupling agent.

$R^1$, $R^2$, and $R^3$ each independently represent a single bond or an alkylene group with a carbon number of 1 to 20, $R^4$ and $R^7$ each independently represent an alkyl group with a carbon number of 1 to 20, $R^5$, $R^8$, and $R^9$ each independently represent a hydrogen atom or an alkyl group with a carbon number of 1 to 20, $R^6$ and $R^{10}$ each independently represent an alkylene group with a carbon number of 1 to 20, and $R^{11}$ represents a hydrogen atom or an alkyl group with a carbon number of 1 to 20. m and x each represent an integer of 1 to 3 where $x \leq m$, p represents 1 or 2, y represents an integer of 1 to 3 where $y \leq (p + 1)$, and z represents an integer of 1 or 2. A plurality of each of D, $R^1$ to $R^{11}$, m, p, x, y, and z, if present, are each independent, and may be the same or different. i represents an integer of 0 to 6, j represents an integer of 0 to 6, k represents an integer of 0 to 6 where (i + j + k) is an integer of 3 to 10, and $((x \times i) + (y \times j) + (z \times k))$ represents an integer of 5 to 30. A represents a hydrocarbon group or an organic group containing at least one atom selected from the group consisting of an oxygen atom, a nitrogen atom, a silicon atom, a sulfur atom, and a phosphorus atom and not containing active hydrogen, with a carbon number of 1 to 20. The hydrocarbon group represented by A encompasses saturated, unsaturated, aliphatic, and aromatic hydrocarbon groups. The organic group not containing active hydrogen is, for example, an organic group not containing a functional group having active hydrogen such as hydroxyl group (-OH), secondary amino group (>NH), primary amino group (-NH2), and sulfhydryl group (-SH).

In the foregoing General Formula (I), A is preferably represented by any of the foregoing General Formulas (II) to (V). As a result of A being represented by any of General Formulas (II) to (V), when the rubber composition is used in a tire, the low rolling resistance, wet performance, and wear resistance performance of the tire can be highly balanced.

Preferably, in General Formula (I), A is represented by General Formula (II) or (III), and k represents 0.

More preferably, in General Formula (I), A is represented by General Formula (II) or (III) and k represents 0, and, in General Formula (II) or (III), a represents an integer of 2 to 10.

Still more preferably, in General Formula (I), A is represented by General Formula (II) and k represents 0, and, in General Formula (II), a represents an integer of 2 to 10.

The content of the modified conjugated diene-based polymer (A2) in the rubber component (A) is preferably 10 mass% to 45 mass%, more preferably 25 mass% to 40 mass%, and further preferably 30 mass% to 35 mass%. If the content of the modified conjugated diene-based polymer (A2) in the rubber component (A) is 10 mass% or more, when the rubber composition is used in a tire, the wet performance of the tire can be further improved. If the content of the modified conjugated diene-based polymer (A2) in the rubber component (A) is 45 mass% or less, the processability of the rubber composition is improved.

In the case where the glass transition temperature (Tg) of the modified conjugated diene-based polymer (A2) is more than -50°C, the rubber component (A) in the rubber composition according to the present disclosure preferably further contains the modified conjugated diene-based polymer (A3) having a glass transition temperature (Tg) of -50°C

or less. If the rubber component (A) contains the modified conjugated diene-based polymer (A3), when the rubber composition is used in a tire, the wear resistance performance of the tire can be improved.

The content of the modified conjugated diene-based polymer (A3) in the rubber component (A) is preferably 20 mass% to 50 mass%, more preferably 25 mass% to 40 mass%, and further preferably 30 mass% to 35 mass%. If the content of the modified conjugated diene-based polymer (A3) in the rubber component (A) is 20 mass% or more, the dispersibility of a filler in the rubber composition is improved. When the rubber composition is used in tread rubber of a tire, the wet performance of the tire can be further improved while further reducing the rolling resistance of the tire. If the content of the modified conjugated diene-based polymer (A3) in the rubber component (A) is 50 mass% or less, the proportion of the natural rubber (A1) and modified conjugated diene-based polymer (A2) can be increased. The glass transition temperature (Tg) of the modified conjugated diene-based polymer (A3) is preferably -55°C or less and more preferably -60°C or less, and is preferably -120°C or more and more preferably -100°C or more.

Examples of a modified functional group in the modified conjugated diene-based polymer (A3) include a nitrogen-containing functional group, a silicon-containing functional group, and an oxygen-containing functional group.

Examples of polymers that can be used as the modified conjugated diene-based polymer (A3) include a polymer obtained by using, as a monomer, a conjugated diene compound or a conjugated diene compound and an aromatic vinyl compound and modifying a molecular end and/or main chain of a polymer or copolymer of the conjugated diene compound or a copolymer of the conjugated diene compound and the aromatic vinyl compound with a modifier, and a polymer obtained by using, as a monomer, a conjugated diene compound or a conjugated diene compound and an aromatic vinyl compound and polymerizing or copolymerizing the monomer(s) using a polymerization initiator containing a modified functional group.

Regarding the monomer(s) used in the synthesis of the modified conjugated diene-based polymer (A3), examples of the conjugated diene compound include 1,3-butadiene, isoprene, 1,3-pentadiene, 2,3-dimethylbutadiene, 2-phenyl-1,3-butadiene, and 1,3-hexadiene. Examples of the aromatic vinyl compound include styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene.

Examples of the modified conjugated diene-based polymer (A3) include modified isoprene rubber, modified butadiene rubber, modified styrene-butadiene copolymer rubber, and modified styrene-isoprene copolymer rubber.

As the modifier that can be used in the production of the modified conjugated diene-based polymer (A3), a hydrocarbyloxy silane compound is preferable. As the hydrocarbyloxy silane compound, a compound represented by the following General Formula (VII) is preferable:

$$R^{26}_{b}\text{-Si-}(OR^{27})_{4-b} \cdots \qquad \text{(VII).}$$

In General Formula (VII), $R^{26}$ and $R^{27}$ each independently represent a univalent aliphatic hydrocarbon group with a carbon number of 1 to 20 or a univalent aromatic hydrocarbon group with a carbon number of 6 to 18, and b represents an integer of 0 to 2. A plurality of $OR^{27}$, if present, may be the same or different. No active proton is contained in the molecule.

As the hydrocarbyloxy silane compound, a compound represented by the following General Formula (VIII) is also preferable:

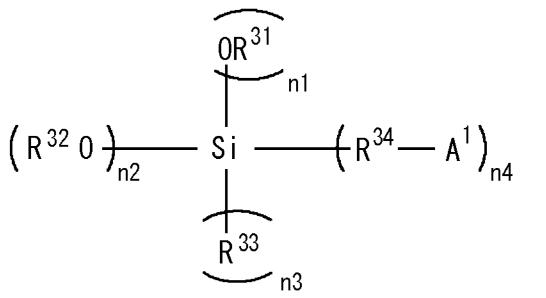
・・・・ (VIII)

In General Formula (VIII), n1 + n2 + n3 + n4 is 4 (where n2 represents an integer of 1 to 4, and n1, n3, and n4 each represent an integer of 0 to 3), $A^1$ represents at least one functional group selected from the group consisting of a saturated cyclic tertiary amine compound residual group, an unsaturated cyclic tertiary amine compound residual group, a ketimine residual group, a nitrile group, an isocyanato group, a thioisocyanato group, an epoxy group, a thioepoxy group, an isocyanuric acid trihydrocarbyl ester group, a carbonic acid dihydrocarbyl ester group, a pyridine group, a ketone group, a thioketone group, an aldehyde group, a thioaldehyde group, an amide group, a carboxylic acid ester group, a thiocarboxylic acid ester group, a carboxylic acid ester metal salt, a thiocarboxylic acid ester metal salt, a carboxylic acid anhydride residual group, a carboxylic acid halogen compound residual group, and a primary or secondary

amino group having a hydolyzable group and a mercapto group having a hydolyzable group, and may be the same or different in the case where n4 is 2 or more, $A^1$ may be a bivalent group that binds to Si and forms a cyclic structure, $R^{31}$ represents a univalent aliphatic or cycloaliphatic hydrocarbon group with a carbon number of 1 to 20 or a univalent aromatic hydrocarbon group with a carbon number of 6 to 18, and may be the same or different in the case where n1 is 2 or more, $R^{33}$ represents a univalent aliphatic or cycloaliphatic hydrocarbon group with a carbon number of 1 to 20, a univalent aromatic hydrocarbon group with a carbon number of 6 to 18, or a halogen atom, and may be the same or different in the case where n3 is 2 or more, $R^{32}$ represents a univalent aliphatic or cycloaliphatic hydrocarbon group with a carbon number of 1 to 20 or a univalent aromatic hydrocarbon group with a carbon number of 6 to 18, both of which may contain a nitrogen atom and/or a silicon atom, and may be the same or different or form a ring together in the case where n2 is 2 or more, and $R^{34}$ represents a bivalent aliphatic or cycloaliphatic hydrocarbon group with a carbon number of 1 to 20 or a bivalent aromatic hydrocarbon group with a carbon number of 6 to 18, and may be the same or different in the case where n4 is 2 or more. As the hydolyzable group in the primary or secondary amino group having a hydolyzable group or the mercapto group having a hydolyzable group, a trimethylsilyl group and a tert-butyldimethylsilyl group are preferable, and a trimethylsilyl group is particularly preferable.

As the compound represented by the foregoing General Formula (VIII), a compound represented by the following General Formula (IX) is preferable:

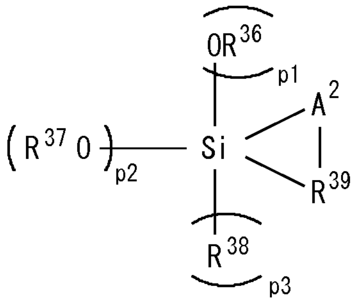

· · · · (IX)

In General Formula (IX), p1 + p2 + p3 is 2 (where p2 represents an integer of 1 to 2, and p1 and p3 each represent an integer of 0 to 1), $A^2$ is NRa (Ra represents a univalent hydrocarbon group, a hydolyzable group, or a nitrogen-containing organic group) or sulfur, $R^{36}$ represents a univalent aliphatic or cycloaliphatic hydrocarbon group with a carbon number of 1 to 20 or a univalent aromatic hydrocarbon group with a carbon number of 6 to 18, $R^{38}$ represents a univalent aliphatic or cycloaliphatic hydrocarbon group with a carbon number of 1 to 20, a univalent aromatic hydrocarbon group with a carbon number of 6 to 18, or a halogen atom, $R^{37}$ represents a univalent aliphatic or cycloaliphatic hydrocarbon group with a carbon number of 1 to 20, a univalent aromatic hydrocarbon group with a carbon number of 6 to 18, or a nitrogen-containing organic group, both of which may contain a nitrogen atom and/or a silicon atom, and may be the same or different or form a ring together in the case where p2 is 2, and $R^{39}$ represents a bivalent aliphatic or cycloaliphatic hydrocarbon group with a carbon number of 1 to 20 or a bivalent aromatic hydrocarbon group with a carbon number of 6 to 18. As the hydolyzable group, a trimethylsilyl group and a tert-butyldimethylsilyl group are preferable, and a trimethylsilyl group is particularly preferable.

As the compound represented by the foregoing General Formula (VIII), a compound represented by the following General Formula (X) is also preferable:

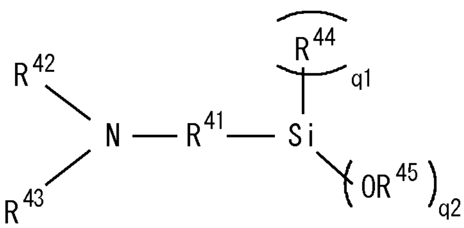

· · · · (X)

In General Formula (X), q1 + q2 is 3 (where q1 represents an integer of 0 to 2, and q2 represents an integer of 1 to 3), $R^{41}$ represents a bivalent aliphatic or cycloaliphatic hydrocarbon group with a carbon number of 1 to 20 or a bivalent aromatic hydrocarbon group with a carbon number of 6 to 18, $R^{42}$ and $R^{43}$ each independently represent a hydolyzable group, a univalent aliphatic or cycloaliphatic hydrocarbon group with a carbon number of 1 to 20, or a univalent aromatic hydrocarbon group with a carbon number of 6 to 18, $R^{44}$ represents a univalent aliphatic or cycloaliphatic hydrocarbon group with a carbon number of 1 to 20 or a univalent aromatic hydrocarbon group with a carbon

number of 6 to 18, and may be the same or different in the case where q1 is 2, $R^{45}$ represents a univalent aliphatic or cycloaliphatic hydrocarbon group with a carbon number of 1 to 20 or a univalent aromatic hydrocarbon group with a carbon number of 6 to 18, and may be the same or different in the case where q2 is 2 or more. As the hydolyzable group, a trimethylsilyl group and a tert-butyldimethylsilyl group are preferable, and a trimethylsilyl group is particularly preferable.

As the compound represented by the foregoing General Formula (VIII), a compound represented by the following General Formula (XI) is also preferable:

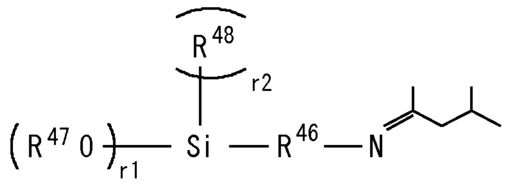

· · · · (XI)

In General Formula (XI), r1 + r2 is 3 (where r1 represents an integer of 1 to 3, and r2 represents an integer of 0 to 2), $R^{46}$ represents a bivalent aliphatic or cycloaliphatic hydrocarbon group with a carbon number of 1 to 20 or a bivalent aromatic hydrocarbon group with a carbon number of 6 to 18, $R^{47}$ represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a univalent aliphatic or cycloaliphatic hydrocarbon group with a carbon number of 1 to 20, or a univalent aromatic hydrocarbon group with a carbon number of 6 to 18, and may be the same or different in the case where r1 is 2 or more, and $R^{48}$ represents a hydrocarbyloxy group with a carbon number of 1 to 20, a univalent aliphatic or cycloaliphatic hydrocarbon group with a carbon number of 1 to 20, or a univalent aromatic hydrocarbon group with a carbon number of 6 to 18, and may be the same or different in the case where r2 is 2.

As the compound represented by the foregoing General Formula (VIII), a compound represented by the following General Formula (XII) is also preferable:

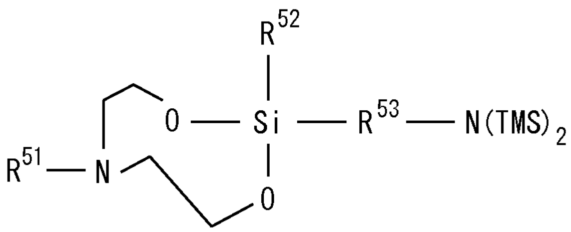

· · · · (XII)

In General Formula (XII), $R^{51}$ represents a trimethylsilyl group, a univalent aliphatic or cycloaliphatic hydrocarbon group with a carbon number of 1 to 20, or a univalent aromatic hydrocarbon group with a carbon number of 6 to 18, $R^{52}$ represents a hydrocarbyloxy group with a carbon number of 1 to 20, a univalent aliphatic or cycloaliphatic hydrocarbon group with a carbon number of 1 to 20, or a univalent aromatic hydrocarbon group with a carbon number of 6 to 18, and $R^{53}$ represents a bivalent aliphatic or cycloaliphatic hydrocarbon group with a carbon number of 1 to 20 or a bivalent aromatic hydrocarbon group with a carbon number of 6 to 18. TMS represents a trimethylsilyl group (the same applies hereafter).

As the compound represented by the foregoing General Formula (VIII), a compound represented by the following General Formula (XIII) is also preferable:

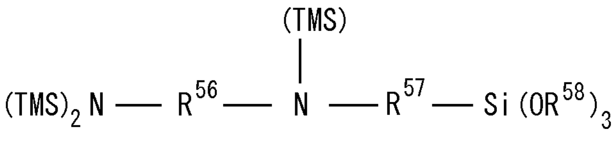

· · · · (XIII)

In General Formula (XIII), $R^{56}$ and $R^{57}$ each independently represent a bivalent aliphatic or cycloaliphatic hydrocarbon group with a carbon number of 1 to 20 or a bivalent aromatic hydrocarbon group with a carbon number of 6 to 18, and $R^{58}$ represents a univalent aliphatic or cycloaliphatic hydrocarbon group with a carbon number of 1 to 20 or a univalent aromatic hydrocarbon group with a carbon number of 6 to 18, and may be the same or different.

As the compound represented by General Formula (VIII), a compound represented by the following General

Formula (XIV) is also preferable:

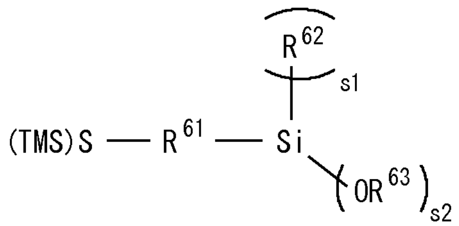

· · · · (XIV)

In General Formula (XIV), s1 + s2 is 3 (where s1 represents an integer of 0 to 2, and s2 represents an integer of 1 to 3), $R^{61}$ represents a bivalent aliphatic or cycloaliphatic hydrocarbon group with a carbon number of 1 to 20 or a bivalent aromatic hydrocarbon group with a carbon number of 6 to 18, and $R^{62}$ and $R^{63}$ each independently represent a univalent aliphatic or cycloaliphatic hydrocarbon group with a carbon number of 1 to 20 or a univalent aromatic hydrocarbon group with a carbon number of 6 to 18. A plurality of $R^{62}$ or $R^{63}$ may be the same or different.

As the compound represented by the foregoing General Formula (VIII), a compound represented by the following General Formula (XV) is also preferable:

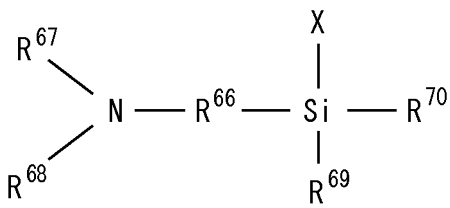

· · · · (XV)

In General Formula (XV), X represents a halogen atom, $R^{66}$ represents a bivalent aliphatic or cycloaliphatic hydrocarbon group with a carbon number of 1 to 20 or a bivalent aromatic hydrocarbon group with a carbon number of 6 to 18, $R^{67}$ and $R^{68}$ each independently represent a hydolyzable group, a univalent aliphatic or cycloaliphatic hydrocarbon group with a carbon number of 1 to 20, or a univalent aromatic hydrocarbon group with a carbon number of 6 to 18 or $R^{67}$ and $R^{68}$ bind to form a bivalent organic group, and $R^{69}$ and $R^{70}$ each independently represent a halogen atom, a hydrocarbyloxy group, a univalent aliphatic or cycloaliphatic hydrocarbon group with a carbon number of 1 to 20, or a univalent aromatic hydrocarbon group with a carbon number of 6 to 18. As $R^{67}$ and $R^{68}$, a hydolyzable group is preferable. As the hydolyzable group, a trimethylsilyl group and a tert-butyldimethylsilyl group are preferable, and a trimethylsilyl group is particularly preferable.

As the hydrocarbyloxy silane compound represented by the foregoing General Formula (VIII), compounds represented by the following General Formulas (XVI) to (XIX) are also preferable:

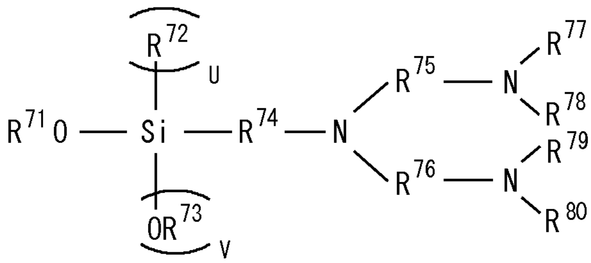

· · · · (XVI)

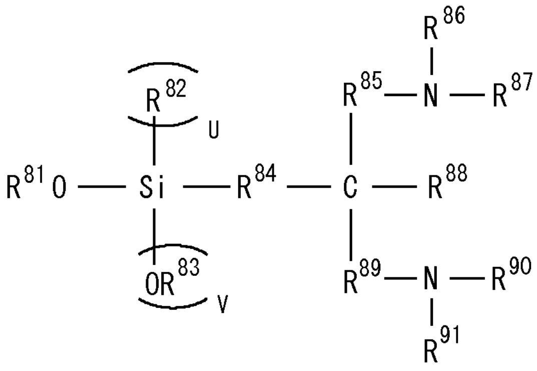

・・・・(XVII)

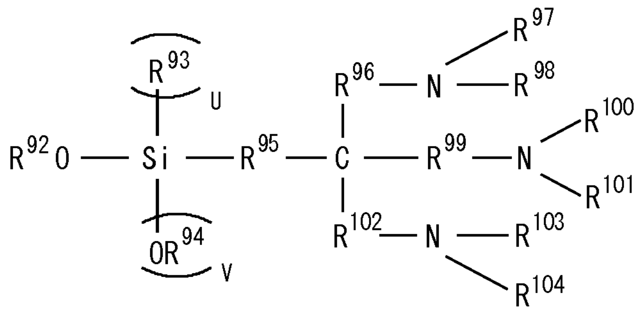

・・・・(XVIII)

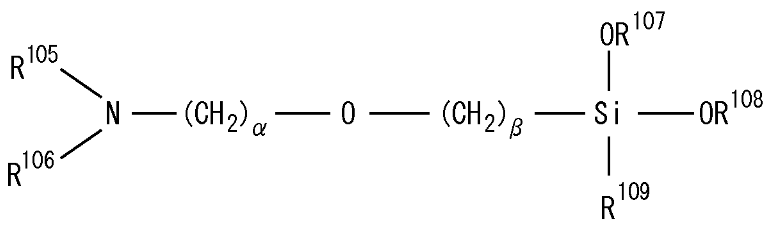

・・・・(XIX)

In General Formulas (XVI) to (XIX), the symbols U and V each represent an integer of 0 to 2 satisfying the relationship U + V = 2, and $R^{71}$ to $R^{109}$ may be the same or different and each represent a monovalent or bivalent aliphatic or cycloaliphatic hydrocarbon group with a carbon number of 1 to 20 or a monovalent or bivalent aromatic hydrocarbon group with a carbon number of 6 to 18. In General Formula (XIX), $\alpha$ and $\beta$ each represent an integer of 0 to 5.

As the polymerization initiator containing the modified functional group, a lithium amide compound is preferable. Examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, and lithium methylphenethylamide.

The rubber component (A) in the rubber composition according to the present disclosure may contain other rubber components besides the foregoing natural rubber (A1), modified conjugated diene-based polymer (A2), and modified conjugated diene-based polymer (A3). Examples of other rubber components include unmodified synthetic diene-based rubbers such as unmodified synthetic isoprene rubber (IR), butadiene rubber (BR), styrene-butadiene copolymer rubber (SBR), and styrene-isoprene copolymer rubber (SIR).

The rubber composition according to the present disclosure contains the thermoplastic resin (B). As a result of the rubber composition containing the thermoplastic resin (B), the elastic modulus is improved, and, when the rubber composition is used in a tire, both steering stability on a dry road surface and wet performance can be achieved.

The content of the thermoplastic resin (B) is preferably 1 part to 50 parts by mass and further preferably 5 parts to 30 parts by mass, with respect to 100 parts by mass of the rubber component (A). If the content of the thermoplastic resin (B) with respect to 100 parts by mass of the rubber component (A) is 1 part by mass or more, the wet performance of the rubber composition can be further improved. If the content of the thermoplastic resin (B) with respect to 100 parts by mass of the rubber component (A) is 50 parts by mass or less, a decrease in the elastic modulus of the rubber composition can be suppressed more easily. Hence, if the content of the thermoplastic resin (B) with respect to 100 parts by mass of the rubber component (A) is 1 part to 50 parts by mass, the wet performance of the tire can be further improved.

Examples of the thermoplastic resin (B) include a Cs-based resin, a $C_5/C_9$-based resin, a $C_9$-based resin, a dicyclopentadiene resin, a terpene phenol resin, a terpene resin, a rosin resin, and an alkylphenol resin. At least one selected from the group consisting of a Cs-based resin, a $C_5/C_9$-based resin, a $C_9$-based resin, a dicyclopentadiene resin, a rosin resin, and an alkylphenol resin is preferable. In the case where at least one of a Cs-based resin, a $C_5/C_9$-based resin, a $C_9$-based resin, a dicyclopentadiene resin, a terpene phenol resin, a terpene resin, a rosin resin, and an alkylphenol resin is contained as the thermoplastic resin (B), the wet performance of the tire can be further improved.

As the thermoplastic resin (B), a Cs-based resin, a $C_5/C_9$-based resin, and a $C_9$-based resin are particularly preferable. A $C_5/C_9$-based resin and a Cg-based resin are highly compatible with the natural rubber (A1), and can further enhance the effect of increasing the elastic modulus of the rubber composition in the low-strain region and the effect of decreasing the elastic modulus of the rubber composition in the high-strain region, thereby further improving the wet performance of the tire. One kind of the thermoplastic resin (B) may be used alone, or two or more kinds may be used in combination.

The Cs-based resin refers to a Cs-based synthetic petroleum resin. Examples of the Cs-based resin include aliphatic petroleum resins obtained by polymerizing, using a Friedel-Crafts catalyst such as $AlCl_3$ or $BF_3$, a $C_5$ fraction obtained by pyrolysis of naphtha in the petrochemical industry. The $C_5$ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. Commercial products may be used as the Cs-based resin, such as "ESCOREZ® 1000 series" which are aliphatic petroleum resins produced by ExxonMobil Chemical Company (ESCOREZ is a registered trademark in Japan, other countries, or both), "A100, B170, M100, R100" in the "Quintone® 100 series" which are aliphatic petroleum resins produced by Zeon Corporation (Quintone is a registered trademark in Japan, other countries, or both), and "T-REZ RA100" produced by Tonen Chemical Corporation.

The $C_5/C_9$-based resin refers to a Cs/C9-based synthetic petroleum resin. Examples of the $C_5/C_9$-based resin include solid polymers obtained by polymerizing a petroleum-derived $C_5$ fraction and $C_9$ fraction using a Friedel-Crafts catalyst such as $AlCl_3$ or $BF_3$. Specific examples include copolymers having, as main components, styrene, vinyltoluene, $\alpha$-methylstyrene, indene, and the like. As the $C_5/C_9$-based resin, a resin with little $C_9$ or higher component is preferable from the viewpoint of compatibility with the rubber component. Here, including "little $C_9$ or higher component" means that the amount of $C_9$ or higher component in the total amount of the resin is less than 50 mass%, and preferably 40 mass% or less. Commercial products may be used as the $C_5/C_9$-based resin, such as "Quintone® G100B" (produced by Zeon Corporation), "ECR213" (produced by ExxonMobil Chemical Company), and "T-REZ RD104" (produced by Tonen Chemical Corporation).

The $C_9$-based resin is, for example, a resin resulting from polymerization of an aromatic group with a carbon number of 9 that has, as principal monomers, vinyl toluene, alkyl styrene, and indene, which are $C_9$ fraction by-products produced along with petrochemical raw materials, such as ethylene or propylene, by pyrolysis of naphtha in the petrochemical industry. Specific examples of $C_9$ fractions obtained by pyrolysis of naphtha include vinyltoluene, $\alpha$-methylstyrene, $\beta$-methylstyrene, $\gamma$-methylstyrene, o-methylstyrene, p-methylstyrene, and indene. Along with a $C_9$ fraction, the $C_9$-based resin may use a $C_8$ fraction, such as styrene, a $C_{10}$ fraction, such as methylindene or 1,3-dimethylstyrene, and other substances such as naphthalene, vinylnaphthalene, vinylanthracene, or p-tert-butylstyrene as raw materials. These $C_8$-$C_{10}$ fractions and the like may simply be mixed or may be copolymerized using a Friedel-Crafts catalyst, for example, to obtain the $C_9$-based resin. The $C_9$-based resin may be a modified petroleum resin modified by a compound including a hydroxyl group, an unsaturated carboxylic acid compound, or the like. Commercial products may be used as the $C_9$-based resin. Examples of an unmodified $C_9$-based petroleum resin include "Nisseki Neopolymer® L-90", "Nisseki Neopolymer® 120", "Nisseki Neopolymer® 130", and "Nisseki Neopolymer® 140" (produced by JX Nippon Oil & Energy Corporation) (Neopolymer is a registered trademark in Japan, other countries, or both).

The dicyclopentadiene resin is a petroleum resin produced using dicyclopentadiene, which is obtainable by dimerization of cyclopentadiene, as a main raw material. Commercial products may be used as the dicyclopentadiene resin. Examples include "1105, 1325, 1340" in the "Quintone® 1000 series", which are alicyclic petroleum resins produced by Zeon Corporation.

The terpene phenol resin can be obtained, for example, using a method by which terpenes and various phenols are reacted by using a Friedel-Crafts catalyst, or further condensed with formalin. The terpenes of the raw material are not limited, but are preferably monoterpene hydrocarbons such as $\alpha$-pinene and limonene, more preferably terpenes containing $\alpha$-pinene, and particularly preferably $\alpha$-pinene. Commercial products may be used as the terpene phenol resin. Examples include "Tamanol 803L" and "Tamanol 901" (produced by Arakawa Chemical Industries, Ltd.), and "YS Polyster® U" series, "YS Polyster® T" series, "YS Polyster® S" series, "YS Polyster® G" series, "YS Polyster® N" series, "YS Polyster® K" series, and "YS Polyster® TH" series (produced by Yasuhara Chemical Co., Ltd.) (Polyster is a registered trademark in Japan, other countries, or both).

The terpene resin is a solid resin obtained by polymerization, using a Friedel-Crafts catalyst, of turpentine oil

obtained simultaneously when obtaining rosin from Pinus trees or a polymerization component separated from the turpentine oil. Examples include β-pinene resin and α-pinene resin. Commercial products may be used as the terpene resin. Examples include "YS Resin" series (PX-1250, TR-105, etc.) produced by Yasuhara Chemical Co., Ltd., and "Piccolyte" series (A115, S115, etc.) produced by Hercules Inc.

The rosin resin is obtained as a residue after distilling turpentine essential oil from collected balsams such as pine resin (pine tar) which is the sap from Pinaceae plants. The rosin resin is a natural resin having a rosin acid (abietic acid, palustric acid, isopimaric acid, etc.) as a main component, or a modified resin or hydrogenated resin produced by subjecting the natural resin to modification or hydrogenation. Examples include a natural resin rosin, and a polymerized rosin or partially hydrogenated rosin thereof; a glycerin ester rosin, and a partially hydrogenated rosin, completely hydrogenated rosin, or polymerized rosin thereof; and a pentaerythritol ester rosin, and a partially hydrogenated rosin or polymerized rosin thereof. The natural resin rosin may, for example, be gum rosin, tall oil rosin, or wood rosin contained in crude turpentine or tall oil. Commercial products may be used as the rosin resin. Examples include "NEOTALL 105" (produced by Harima Chemicals Group, Inc.), "SN-TACK 754" (produced by San Nopco Limited), "Lime Resin No. 1", "PENSEL A", and "PENSEL AD" (produced by Arakawa Chemical Industries, Ltd.), "Poly-Pale" and "Pentalyn C" (produced by Eastman Chemical Company), and "Highrosin® S" (produced by Taishamatsu essential oil Co., Ltd.) (Highrosin is a registered trademark in Japan, other countries, or both).

The alkylphenol resin is, for example, obtained through a condensation reaction of alkylphenol and formaldehyde in the presence of a catalyst. Commercial products may be used as the alkylphenol resin. Examples include "Hitanol 1502P" (alkylphenol-formaldehyde resin, produced by Hitachi Chemical Co., Ltd.), "TACKIROL 201" (alkylphenol-formaldehyde resin, produced by Taoka Chemical Co., Ltd.), "TACKIROL 250-1" (brominated alkylphenol-formaldehyde resin, produced by Taoka Chemical Co., Ltd.), "TACKIROL 250-III" (brominated alkylphenol-formaldehyde resin, produced by Taoka Chemical Co., Ltd.), "R7521P", "SP1068", "R7510PJ", "R7572P", and "R7578P" (produced by SI Group, Inc.).

The rubber composition according to the present disclosure preferably contains a filler. The rubber composition according to the present disclosure preferably contains silica as the filler. The proportion of the silica in the filler is preferably 60 mass% or more, more preferably 70 mass% or more, and still more preferably 90 mass% or more. The silica may constitute the whole filler. If the proportion of the silica in the filler is 60 mass% or more, tanδ of the rubber composition further decreases, and the rolling resistance of the tire using the rubber composition can be further reduced.

Examples of the silica include wet silica (hydrous silicate), dry silica (anhydrous silicate), calcium silicate, and aluminum silicate. Of these, wet silica is preferable. One of these silicas may be used individually, or two or more of these silicas may be used together.

The blending amount of the silica in the rubber composition according to the present disclosure with respect to 100 parts by mass of the rubber component (A) is preferably in a range of 40 parts to 120 parts by mass, and further preferably in a range of 45 parts to 70 parts by mass. If the blending amount of the silica with respect to 100 parts by mass of the rubber component (A) is 40 parts by mass or more, tanδ of the rubber composition at around 60°C decreases, and the rolling resistance of the tire using the rubber composition can be further reduced. If the blending amount of the silica with respect to 100 parts by mass of the rubber component (A) is 120 parts by mass or less, the rubber composition has high flexibility. As a result of using such a rubber composition in tread rubber of a tire, the deformation volume of the tread rubber increases, so that the wet performance of the tire can be further improved.

The rubber composition according to the present disclosure preferably further contains carbon black as the filler. The blending amount of the carbon black with respect to 100 parts by mass of the rubber component (A) is preferably in a range of 1 part to 10 parts by mass, and further preferably in a range of 3 parts to 8 parts by mass. If the blending amount of the carbon black is 1 part by mass or more, the rigidity of the rubber composition can be improved. If the blending amount of the carbon black is 10 parts by mass or less, an increase in tanδ can be suppressed. As a result of using such a rubber composition in tread rubber of a tire, the low rolling resistance and wet performance of the tire can both be achieved at higher level.

The carbon black is not limited, and may, for example, be GPF, FEF, HAF, ISAF, or SAF grade carbon black. Of these, ISAF and SAF grade carbon black are preferable from the viewpoint of improving tire wet performance. One of these carbon blacks may be used individually, or two or more of these carbon blacks may be used together.

Besides the foregoing silica and carbon black, an inorganic compound represented by the following General Formula (XX) is also preferable as the filler:

$$nM \cdot xSiO_y \cdot zH_2O \ ... \qquad (XX)$$

where M represents a metal selected from the group consisting of aluminum, magnesium, titanium, calcium, and zirconium, oxides and hydroxides of these metals, hydrates thereof, and carbonate salts of these metals, and n, x, y, and z respectively represent an integer of 1 to 5, an integer of 0 to 10, an integer of 2 to 5, and an integer of 0 to 10.

Examples of the inorganic compound of General Formula (XX) include alumina ($Al_2O_3$) such as γ-alumina and

α-alumina, alumina hydrate ($Al_2O_3{\cdot}H_2O$) such as boemite and diaspore, aluminum hydroxide [$Al(OH)_3$] such as gibbsite and bayerite, aluminum carbonate [$Al_2(CO_3)_3$], magnesium hydroxide [$Mg(OH)_2$], magnesium oxide (MgO), magnesium carbonate ($MgCO_3$), talc ($3MgO{\cdot}4SiO_2{\cdot}H_2O$), attapulgite ($5MgO{\cdot}8SiO_2{\cdot}9H_2O$), titanium white ($TiO_2$), titanium black ($TiO_{2n-1}$), calcium oxide (CaO), calcium hydroxide [$Ca(OH)_2$], aluminum magnesium oxide ($MgO{\cdot}Al_2O_3$), clay ($Al_2O_3{\cdot}2SiO_2$), kaolin ($Al_2O_3{\cdot}2SiO_2{\cdot}2H_2O$), pyrophyllite ($Al_2O_3{\cdot}4SiO_2{\cdot}H_2O$), bentonite ($Al_2O_3{\cdot}4SiO_2{\cdot}2H_2O$), aluminum silicate ($Al_2SiO_5$, $Al_4{\cdot}3SiO_4{\cdot}5H_2O$, etc.), magnesium silicate ($Mg_2SiO_4$, $MgSiO_3$, etc.), calcium silicate ($Ca_2SiO_4$, etc.), aluminum calcium silicate ($Al_2O_3{\cdot}CaO{\cdot}2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2{\cdot}nH_2O$], zirconium carbonate [$Zr(CO_3)_2$], and crystalline aluminosilicate salts containing hydrogen, an alkali metal, or an alkaline earth metal, which compensates the charge, for example, various kinds of zeolite, and the like.

The average particle size of the inorganic compound of General Formula (XX) is preferably 0.01 μm to 10 μm and further preferably 0.05 μm to 5 μm, from the viewpoint of the balance between wear resistance performance and wet performance.

The blending amount of the inorganic compound of General Formula (XX) with respect to 100 parts by mass of the rubber component (A) is preferably in a range of 5 parts to 25 parts by mass, and further preferably in a range of 5 parts to 20 parts by mass.

In the rubber composition according to the present disclosure, the blending amount of the filler with respect to 100 parts by mass of the rubber component (A) is preferably 30 parts by mass or more and more preferably 40 parts by mass or more, and is preferably 100 parts by mass or less and more preferably 90 parts by mass or less. If the blending amount of the filler in the rubber composition is in this range, as a result of using such a rubber composition in tread rubber of a tire, the low rolling resistance and wet performance of the tire can be further improved.

In the case where the rubber composition according to the present disclosure contains silica as a filler, the rubber composition according to the present disclosure preferably further contains a glycerin fatty acid ester composition containing a glycerin fatty acid ester that is an ester of glycerin and two or more kinds of fatty acids, wherein the most fatty acid component of the two or more kinds of fatty acids constituting the glycerin fatty acid ester accounts for 10 mass% to 90 mass% in the whole fatty acids, and the glycerin fatty acid ester further contains 50 mass% to 100 mass% of a monoester component. In the case where the rubber composition contains the glycerin fatty acid ester composition, the processability of the rubber composition can be improved. As a result of using such a rubber composition in a tire, the rolling resistance of the tire can be further reduced.

The glycerin fatty acid ester is an ester of glycerin and two or more kinds of fatty acids. The "glycerin fatty acid ester" herein is a compound obtained by subjecting at least one of three OH groups of glycerin to ester bond with a COOH group of fatty acid.

The glycerin fatty acid ester may be any of a glycerin fatty acid monoester (monoester component) obtained by esterification of one molecule of glycerin and one molecule of fatty acid, a glycerin fatty acid diester (diester component) obtained by esterification of one molecule of glycerin and two molecules of fatty acid, a glycerin fatty acid triester (triester component) obtained by esterification of one molecule of glycerin and three molecules of fatty acid, and any mixture thereof, but a glycerin fatty acid monoester is preferable. In the case where the glycerin fatty acid ester is a mixture of a glycerin fatty acid monoester, a glycerin fatty acid diester, and a glycerin fatty acid triester, the content of each ester can be measured by gel permeation chromatography (GPC). The two fatty acids constituting the glycerin fatty acid diester may be the same or different, and the three fatty acids constituting the glycerin fatty acid triester may be the same or different.

The glycerin fatty acid ester is an ester of glycerin and two or more kinds of fatty acids. The glycerin fatty acid ester may be a glycerin fatty acid diester or a glycerin fatty acid triester obtained by esterification of two or more kinds of fatty acids and one molecule of glycerin, but is preferably a mixture of a glycerin fatty acid monoester obtained by esterification of one molecule of glycerin and one molecule of one kind of fatty acid from among the two or more kinds of fatty acids and a glycerin fatty acid monoester obtained by esterification of one molecule of glycerin and one molecule of another kind of fatty acid.

As the two or more kinds of fatty acids as raw materials of the glycerin fatty acid ester (i.e. the constituent fatty acids of the glycerin fatty acid ester), a fatty acid with a carbon number of 8 to 22 is preferable, a fatty acid with a carbon number of 12 to 18 is more preferable, a fatty acid with a carbon number of 14 to 18 is further preferable, and a fatty acid with a carbon number of 16 and a fatty acid with a carbon number of 18 are even more preferable, from the viewpoint of the processability, low loss property, and fracture property of the rubber composition. More preferably, of the two or more kinds of fatty acids as raw materials of the glycerin fatty acid ester, one of the most fatty acid component and the second most fatty acid component is a fatty acid with a carbon number of 16 and the other one of the most fatty acid component and the second most fatty acid component is a fatty acid with a carbon number of 18.

In the case where the glycerin fatty acid ester is an ester of glycerin and a fatty acid with a carbon number of 16 and a fatty acid with a carbon number of 18, the mass ratio between the fatty acid with a carbon number of 16 and the fatty acid with a carbon number of 18 (the fatty acid with a carbon number of 16 / the fatty acid with a carbon number

of 18) is preferably in a range of 90/10 to 10/90, more preferably in a range of 80/20 to 20/80, and further preferably in a range of 75/25 to 25/75. If the mass ratio between the fatty acid with a carbon number of 16 and the fatty acid with a carbon number of 18 is in this range, the processability, low loss property, and fracture property of the rubber composition can be further improved.

Each constituent fatty acid of the glycerin fatty acid ester may be linear or branched, but is preferably linear. Each constituent fatty acid may be a saturated fatty acid or an unsaturated fatty acid, but is preferably a saturated fatty acid.

Specific examples of the constituent fatty acids of the glycerin fatty acid ester include caprylic acid, pelargonic acid, capric acid, lauric acid, myristic acid, palmitic acid, stearic acid, isostearic acid, oleic acid, linoleic acid, linolenic acid, arachic acid, arachidonic acid, and behenic acid. Of these, lauric acid, myristic acid, palmitic acid, and stearic acid are preferable, and palmitic acid and stearic acid are more preferable.

As the glycerin fatty acid ester, specifically, lauric acid monoglyceride, myristic acid monoglyceride, palmitic acid monoglyceride, and stearic acid monoglyceride are preferable, and palmitic acid monoglyceride and stearic acid monoglyceride are more preferable.

In the rubber composition according to the present disclosure, the blending amount of the glycerin fatty acid ester composition with respect to 100 parts by mass of the silica is preferably 0.5 parts by mass or more, more preferably 1 part by mass or more, and still more preferably 1.5 parts by mass or more from the viewpoint of the processability of the rubber composition, and preferably 20 parts by mass or less, more preferably 10 parts by mass or less, and still more preferably 5 parts by mass or less from the viewpoint of the fracture property of the rubber composition.

The blending amount of the glycerin fatty acid ester composition with respect to 100 parts by mass of the rubber component (A) is preferably 0.5 parts by mass or more, more preferably 1 part by mass or more, and still more preferably 1.5 parts by mass or more from the viewpoint of the processability of the rubber composition, and preferably 10 parts by mass or less, more preferably 5 parts by mass or less, and still more preferably 3 parts by mass or less from the viewpoint of the fracture property of the rubber composition.

To improve the effect of containing the silica, the rubber composition according to the present disclosure preferably contains a silane coupling agent together with the silica. The silane coupling agent is not limited, and examples include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, 3-octanoylthiopropyltriethoxysilane, and 3-[ethoxybis(3,6,9,12,15-pentaoxaoctacosane-1-yloxy)silyl]-1-propanethiol ("Si363" produced by Evonik Degussa). One of these silane coupling agents may be used individually, or two or more of these silane coupling agents may be used in combination.

The blending amount of the silane coupling agent with respect to 100 parts by mass of the silica is preferably 1 part by mass or more and further preferably 4 parts by mass or more, and is preferably 20 parts by mass or less and further preferably 12 parts by mass or less, from the viewpoint of improving the dispersibility of the silica.

The rubber composition according to the present disclosure may further contain a softener, from the viewpoint of processability and operability. The blending amount of the softener with respect to 100 parts by mass of the rubber component (A) is preferably in a range of 1 part to 5 parts by mass, and more preferably in a range of 1.5 parts to 3 parts by mass. Adding 1 part by mass or more of the softener facilitates kneading of the rubber composition. Adding 5 parts by mass or less of the softener suppresses a decrease in the rigidity of the rubber composition.

Examples of the softener include mineral-derived oil, petroleum-derived aromatic oil, paraffinic oil, naphthenic oil, and palm oil derived from natural products. Of these, a mineral-derived softener and a petroleum-derived softener are preferable from the viewpoint of improving the wet performance of the tire.

The rubber composition according to the present disclosure may further contain a fatty acid metal salt. Examples of the metal used in the fatty acid metal salt include Zn, K, Ca, Na, Mg, Co, Ni, Ba, Fe, Al, Cu, and Mn. Of these, Zn is preferable. Examples of the fatty acid used in the fatty acid metal salt include saturated or unsaturated fatty acids with a carbon number of 4 to 30 having a linear, branched, or cyclic structure, and mixtures thereof. Of these, saturated or unsaturated linear fatty acids with a carbon number of 10 to 22 are preferable. Examples of saturated linear fatty acids with a carbon number of 10 to 22 include lauric acid, myristic acid, palmitic acid, and stearic acid. Examples of unsaturated linear fatty acids with a carbon number of 10 to 22 include oleic acid, linoleic acid, linolenic acid, and arachidonic acid. One of these fatty acid metal salts may be used individually, or two or more of these fatty acid metal salts may be used in combination.

The blending amount of the fatty acid metal salt with respect to 100 parts by mass of the rubber component (A) is preferably in a range of 0.1 parts to 10 parts by mass, and further preferably in a range of 0.5 parts to 5 parts by mass.

In addition to the foregoing rubber component (A), thermoplastic resin (B), filler, glycerin fatty acid ester composition, silane coupling agent, softener, and fatty acid metal salt, the rubber composition according to the present disclosure may further contain compounding agents typically used in the rubber industry. For example, stearic acid, an age resistor, zinc oxide (zinc white), a vulcanization accelerator, a vulcanizing agent, and the like may be appropriately selected and added in a range that does not impede the object of the present disclosure. Commercial products may be suitably used as these compounding agents.
The rubber composition according to the present disclosure can be used in a variety of rubber products such as tires. In particular, the rubber composition according to the present disclosure is suitable for tread rubber of a tire.

<Tire>

A tire according to the present disclosure uses the above-described rubber composition in its tread rubber. Since the above-described rubber composition is used in the tread rubber of the tire according to the present disclosure, all of the wet performance, low rolling resistance, and steering stability on a dry road surface of the tire can be highly achieved. The tire according to the present disclosure is usable in a variety of vehicles, but is preferably used as a tire for passenger vehicles.
In accordance with the type of tire intended for use, the tire according to the present disclosure may be obtained by first forming a tire using an unvulcanized rubber composition and then vulcanizing the tire, or by first forming a tire using semi-vulcanized rubber yielded by a preliminary vulcanization process or the like and then fully vulcanizing the tire. The tire according to the present disclosure is preferably a pneumatic tire. The pneumatic tire may be filled with ordinary air or air with an adjusted partial pressure of oxygen, or may be filled with an inert gas such as nitrogen, argon, or helium.

EXAMPLES

The presently disclosed techniques will be described in more detail below by way of examples, although the present disclosure is not limited to the following examples.
The bound styrene content, microstructure of a butadiene portion, molecular weight, contracting factor (g'), Mooney viscosity, glass transition temperature (Tg), modification rate, presence of a nitrogen atom, and presence of a silicon atom of each synthesized modified conjugated diene-based polymer were analyzed by the following methods.

(1) Bound styrene content

A modified conjugated diene-based polymer was used as a sample. 100 mg of the sample was dissolved in chloroform to be diluted to 100 mL, to obtain a measurement sample. Based on the absorption of a phenyl group of styrene at the ultraviolet absorption wavelength (in the vicinity of 254 nm), the bound styrene content (mass%) with respect to 100 mass% of the sample was measured (spectrophotometer "UV-2450" produced by Shimadzu Corporation).

(2) Microstructure of butadiene portion (1,2-vinyl bond content)

A modified conjugated diene-based polymer was used as a sample. 50 mg of the sample was dissolved in 10 mL of carbon disulfide, to obtain a measurement sample. A solution cell was used to measure an infrared spectrum in a range of 600 $cm^{-1}$ to 1000 $cm^{-1}$, and, in accordance with a calculation formula of the Hampton method (a method described in R. R. Hampton, Analytical Chemistry 21, 923 (1949)) based on absorbance at a prescribed wavenumber, the microstructure of a butadiene portion, namely, 1,2-vinyl bond content (mol%), was obtained (Fourier transform infrared spectrophotometer "FT-IR230" produced by JASCO Corporation).

(3) Molecular weight

A conjugated diene-based polymer or a modified conjugated diene-based polymer was used as a sample to measure a chromatogram using a GPC measurement apparatus ("HLC-8320GPC" produced by Tosoh Corporation) including a series of three columns using a polystyrene-based gel as a filler and using an RI detector ("HLC8020" produced by Tosoh Corporation), and on the basis of a calibration curve obtained using standard polystyrene, the weight-average molecular weight (Mw), the number-average molecular weight (Mn), the molecular weight distribution (Mw/Mn), the peak top molecular weight ($Mp_1$) of the modified conjugated diene-based polymer, the peak top molecular weight ($Mp_2$) of the conjugated diene-based polymer, the ratio therebetween ($Mp_1/Mp_2$), and the ratio of a molecular weight of $200 \times 10^4$ or more and $500 \times 10^4$ or less were obtained. As an eluent, THF (tetrahydrofuran) containing 5 mmol/L of triethylamine was used. As the columns, three columns available under the trade name "TSKgel SuperMultpore HZ-H"

produced by Tosoh Corporation were connected to one another, and a guard column available under the trade name "TSKguardcolumn SuperMP(HZ)-H" produced by Tosoh Corporation was connected to the upstream side of these columns. 10 mg of the sample for the measurement was dissolved in 10 mL of THF to obtain a measurement solution, and 10 μL of the measurement solution was injected into the GPC measurement apparatus to perform the measurement under conditions of an oven temperature of 40°C and a THF flow rate of 0.35 mL/min.

The peak top molecular weights ($Mp_1$ and $Mp_2$) were obtained as follows. On a GPC curve obtained by the measurement, a peak detected as the highest molecular weight component was selected. For the selected peak, the molecular weight corresponding to the maximum value of the peak was calculated and taken to be the peak top molecular weight.

The ratio of a molecular weight of $200 \times 10^4$ or more and $500 \times 10^4$ or less was calculated by, based on an integral molecular weight distribution curve, subtracting the ratio occupied, in the whole molecular weight, by a molecular weight less than $200 \times 10^4$ from the ratio occupied by a molecular weight of $500 \times 10^4$ or less.

(4) Contracting factor (g')

A modified conjugated diene-based polymer was used as a sample to perform measurement using a GPC measurement apparatus ("GPCmax VE-2001" produced by Malvern) including a series of three columns using a polystyrene-based gel as a filler, and using three detectors connected in order of a light scattering detector, an RI detector, and a viscosity detector ("TDA305" produced by Malvern), and, on the basis of standard polystyrene, the absolute molecular weight was obtained based on the results obtained by the light scattering detector and the RI detector, and the intrinsic viscosity was obtained based on the results obtained by the RI detector and the viscosity detector. Assuming that a linear polymer is in accordance with intrinsic viscosity $[\eta] = -3.883M^{0.771}$, the contracting factor (g') as the ratio of intrinsic viscosity corresponding to each molecular weight was calculated. As an eluent, THF containing 5 mmol/L of triethylamine was used. As the columns, columns available under the trade names "TSKgel G4000HXL", "TSKgel G5000HXL", and "TSKgel G6000HXL" produced by Tosoh Corporation connected to one another were used. 20 mg of the sample for the measurement was dissolved in 10 mL of THF to obtain a measurement solution, and 100 μL of the measurement solution was injected into the GPC measurement apparatus to perform the measurement under conditions of an oven temperature of 40°C and a THF flow rate of 1 mL/min.

(5) Mooney viscosity

A conjugated diene-based polymer or a modified conjugated diene-based polymer was used as a sample to measure the Mooney viscosity using a Mooney viscometer ("VR1132" produced by Ueshima Seisakusho Co., Ltd.) and using an L-type rotor in accordance with JIS K6300. The measurement temperature was set to 110°C when the sample was a conjugated diene-based polymer, and 100°C when the sample was a modified conjugated diene-based polymer. First, the sample was preheated for 1 min at a test temperature, the rotor was rotated at 2 rpm, and a torque measured after 4 min was taken to be the Mooney viscosity ($ML_{(1+4)}$).

(6) Glass transition temperature (Tg)

A modified conjugated diene-based polymer was used as a sample to record a DSC curve in accordance with ISO 22768: 2006 using a differential scanning calorimeter "DSC3200S" produced by MAC Science Co., Ltd. under a flow of helium at 50 mL/min during temperature increase from -100°C at a rate of 20°C/min, and a peak top (inflection point) of the obtained DSC differential curve was taken to be the glass transition temperature.

(7) Modification rate

A modified conjugated diene-based polymer was used as a sample to perform measurement by applying a property that a modified basic polymer component adsorbs to a GPC column using a silica-based gel as a filler. A chromatogram obtained by measurement using a polystyrene-based column and a chromatogram obtained by measurement using a silica-based column were obtained by using a sample solution containing the sample and low molecular weight internal standard polystyrene, and, based on the difference between these chromatograms, the adsorption amount to the silica-based column was measured to obtain the modification rate. Specifically, the measurement was performed as described below.

Preparation of sample solution: 10 mg of the sample and 5 mg of standard polystyrene were dissolved in 20 mL of THF to obtain a sample solution.

GPC measurement conditions using polystyrene-based column: An apparatus available under the trade name "HLC-8320GPC" produced by Tosoh Corporation was used, THF containing 5 mmol/L of triethylamine was used as an

eluent, and 10 μL of the sample solution was injected into the apparatus to obtain a chromatogram by using an RI detector under conditions of a column oven temperature of 40°C and a THF flow rate of 0.35 mL/min. Three columns available under the trade name "TSKgel SuperMultiporeHZ-H" produced by Tosoh Corporation were connected to one another, and a guard column available under the trade name "TSKguardcolumn SuperMP(HZ)-H" produced by Tosoh Corporation was connected to the upstream side of these columns.

GPC measurement conditions using silica-based column: An apparatus available under the trade name of "HLC-8320GPC" produced by Tosoh Corporation was used, THF was used as an eluent, and 50 μL of the sample solution was injected into the apparatus to obtain a chromatogram by using an RI detector under conditions of a column oven temperature of 40°C and a THF flow rate of 0.5 ml/min. Columns available under the trade names "Zorbax PSM-1000S", "PSM-300S" and "PSM-60S" were connected to one another, and a guard column available under the trade name "DIOL 4.6 × 12.5 mm 5 micron" was connected to the upstream side of these columns.

Calculation method for modification rate: Assuming that the whole peak area was 100, the peak area of the sample was PI, and the peak area of standard polystyrene was P2 in the chromatogram obtained using the polystyrene-based column, and that the whole peak area was 100, the peak area of the sample was P3, and the peak area of standard polystyrene was P4 in the chromatogram obtained using the silica-based column, the modification rate (%) was obtained according to the following formula:

$$\text{modification rate } (\%) = [1 - (P2 \times P3)/(P1 \times P4)] \times 100$$

(where P1 + P2 = P3 + P4 = 100).

(8) Presence of nitrogen atom

Measurement was performed in the same way as (7), and, if the calculated modification rate was 10% or more, it was determined that the sample had a nitrogen atom.

(9) Presence of silicon atom

Measurement was performed by using 0.5 g of a modified conjugated diene-based polymer as a sample and using an ultraviolet visible spectrophotometer ("UV-1800" produced by Shimadzu Corporation) in accordance with JIS K 0101 44.3.1, and quantitative determination was performed by molybdenum blue absorptiometry. If a silicon atom was detected (detection lower limit: 10 mass ppm), it was determined that the sample had a silicon atom.

<Synthesis of modified styrene-butadiene copolymer rubber (1)>

In an 800 mL pressure-resistant glass container that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-ditetrahydrofurylpropane was added, and 0.8 mmol of n-butyllithium was added. Subsequently, the mixture was polymerized for 1.5 hours at 50°C. Next, 0.72 mmol of N,N-bis(trimethylsilyl)-3-[diethoxy(methyl)silyl]propylamine [corresponding to a compound of General Formula (X)] was added as a modifier to the polymerization reaction system when the polymerization conversion ratio reached nearly 100%, and a modification reaction was carried out for 30 minutes at 50°C. Subsequently, the reaction was stopped by adding 2 mL of an isopropanol solution containing 5 mass% of 2,6-di-t-butyl-p-cresol (BHT), and the result was dried by a usual method to obtain a modified styrene-butadiene copolymer rubber (1).

As a result of analyzing the obtained modified styrene-butadiene copolymer rubber (1) by the foregoing methods, the bound styrene content was 10 mass%, the vinyl bond content of the butadiene portion was 40%, the modification rate was 74%, and the glass transition temperature was -70°C.

<Synthesis of modified styrene-butadiene copolymer rubber (2)>

A tank reactor equipped with a stirrer, that is, a tank pressure vessel including a stirrer and a jacket for temperature control, having an internal volume of 10 L, having a ratio (L/D) between the internal height (L) and the internal diameter (D) of 4.0, and having an inlet in a bottom portion and an outlet in a top portion, was used as a polymerization reactor. 1,3-butadiene, styrene, and n-hexane, from which water had been removed beforehand, were mixed respectively at rates of 17.9 g/min, 9.8 g/min, and 145.3 g/min. In a static mixer provided in the middle of a pipe used for supplying the obtained mixed solution to the inlet of the reactor, n-butyllithium for performing a treatment of inactivating remaining

impurities was added at a rate of 0.117 mmol/min to be mixed, and the resultant mixed solution was continuously supplied to the bottom portion of the reactor. In addition, 2,2-bis(2-oxolanyl) propane as a polar substance and n-butyllithium as a polymerization initiator were supplied respectively at rates of 0.0194 g/min and 0.242 mmol/min to the bottom portion of the polymerization reactor in which the mixed solution was vigorously stirred by the stirrer, to continuously perform a polymerization reaction. The temperature was controlled so that the temperature of a polymer solution in the outlet in the top portion of the reactor could be 75°C. When the polymerization was sufficiently stabilized, a small amount of the polymerization solution prior to addition of a coupling agent was taken out through the outlet in the top portion of the reactor, an antioxidant (BHT) was added thereto in an amount of 0.2 g per 100 g of the resultant polymer, the solvent was then removed, and the Mooney viscosity at 110°C and various molecular weights were measured.

Next, to the polymer solution flown out through the outlet of the reactor, tetrakis(3-trimethoxysilylpropyl)-1,3-propanediamine diluted to 2.74 mmol/L as a coupling agent was continuously added at a rate of 0.0302 mmol/min (a n-hexane solution containing 5.2 ppm of water), and the polymer solution to which the coupling agent had been added was mixed as a result of passing through the static mixer to cause a coupling reaction. Here, the time up to the addition of the coupling agent to the polymer solution flown out from the outlet of the reactor was 4.8 min, the temperature was 68°C, and the difference between the temperature in the polymerization step and the temperature up to the addition of the modifier was 7°C. To the polymer solution in which the coupling reaction had been caused, an antioxidant (BHT) was continuously added at a rate of 0.055 g/min (a n-hexane solution) in an amount of 0.2 g per 100 g of the resultant polymer to complete the coupling reaction. At the same time as the addition of the antioxidant, an oil (JOMO Process NC140 produced by JX Nippon Mining & Metals Corporation) was continuously added in an amount of 37.5 g per 100 g of the resultant polymer, and the resultant was mixed by the static mixer. The solvent was removed by steam stripping to obtain a modified styrene-butadiene copolymer rubber (2).

As a result of analyzing the styrene-butadiene copolymer (conjugated diene-based polymer) obtained from the polymer solution before the addition of the coupling agent by the foregoing methods, the weight-average molecular weight (Mw) was $35.8 \times 10^4$ g/mol, the number-average molecular weight (Mn) was $16.6 \times 10^4$ g/mol, the molecular weight distribution (Mw/Mn) was 2.16, the peak top molecular weight ($Mp_2$) was $30.9 \times 10^4$ g/mol, and the Mooney viscosity (110°C) was 47.

As a result of analyzing the obtained modified styrene-butadiene copolymer rubber (2) by the foregoing methods, the bound styrene content was 35 mass%, the vinyl bond content (1,2-bond content) was 42 mol%, the weight-average molecular weight (Mw) was $85.2 \times 10^4$ g/mol, the number-average molecular weight (Mn) was $38.2 \times 10^4$ g/mol, the molecular weight distribution (Mw/Mn) was 2.23, the peak top molecular weight ($Mp_1$) was $96.8 \times 10^4$ g/mol, the peak top molecular weight ratio ($Mp_1/Mp_2$) was 3.13, the ratio of a molecular weight of $200 \times 10^4$ or more and $500 \times 10^4$ or less was 4.6%, the contracting factor (g') was 0.57, the Mooney viscosity (100°C) was 65, the glass transition temperature (Tg) was -24°C, and the modification rate was 80%. It was also determined that the obtained modified styrene-butadiene copolymer rubber (2) had a nitrogen atom and had a silicon atom.

For the modified styrene-butadiene copolymer rubber (2), the "branching degree" corresponding to the number of branches estimated from the number of functional groups of and the addition amount of the coupling agent was 8 (which can be checked also based on the value of the contracting factor), and the "number of SiOR residual groups" corresponding to a value obtained by subtracting the number of SiOR groups having become nonexistent through the reaction from the total number of SiOR groups contained in one molecule of the coupling agent was 4.

<Preparation and evaluation of rubber composition>

Rubber compositions were produced using a typical Banbury mixer in accordance with the formulations listed in Table 1. The obtained rubber compositions were used in tread rubber to produce passenger vehicle pneumatic radial tires having a tire size of 195/65R15.

The wet performance, rolling resistance, steering stability on a dry road surface, and wear resistance performance of the obtained rubber compositions or tires were evaluated by the following methods. The results are listed in Table 1.

(10) Wet performance

Sample tires were mounted on a test vehicle, and the steering stability in an actual vehicle test on a wet road surface was represented as a subjective score by the driver. The steering stability is expressed as an index, with the subjective score for the tire of Comparative Example 1 being 100. A larger index indicates better wet performance.

(11) Rolling resistance

Each sample tire was rotated by a rotating drum at a speed of 80 km/hr, a load of 4.82 kN was applied, and the rolling resistance was measured. The rolling resistance is expressed as an index, with the inverse of the rolling

resistance for the tire of Comparative Example 1 being 100. A larger index indicates lower rolling resistance, i.e. better rolling resistance.

(12) Steering stability on dry road surface

Sample tires were mounted on a test vehicle, and the steering stability in an actual vehicle test on a dry road surface was represented as a subjective score by the driver. The steering stability is expressed as an index, with the subjective score for the tire of Comparative Example 1 being 100. A larger index indicates better steering stability on a dry road surface.

(13) Wear resistance performance

After vulcanizing each obtained rubber composition for 33 min at 145°C, the wear amount was measured at 23°C using a Lambourn abrasion tester in accordance with JIS K 6264-2: 2005. The wear amount is expressed as an index, with the inverse of the wear amount of Comparative Example 1 being 100. A larger index indicates a smaller wear amount, i.e. better wear resistance performance.

[Table 1]

| | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 | Ex. 9 |
|---|---|---|---|---|---|---|---|---|---|---|---|---|---|---|---|
| Formulation | Natural rubber *1 | Parts by mass | 40 | 40 | 40 | 30 | 40 | 40 | 50 | 60 | 50 | 60 | 40 | 50 | 40 |
| | Modified styrene-butadiene copolymer rubber (1) *2 | | 30 | 30 | 30 | 35 | 45 | 40 | 35 | 25 | 50 | 30 | 40 | 50 | 30 |
| | Styrene-butadiene copolymer rubber *3 | | 0 | 0 | 0 | 0 | 0 | 0 | 0 | 0 | 0 | 13.75 | 27.5 | 0 | 0 |
| | Modified styrene-butadiene copolymer rubber (2) *4 | | 41.3 | 41.3 | 41.3 | 48.1 | 20.6 | 27.5 | 20.6 | 20.6 | 0 | 0 | 0 | 0 | 41.3 |
| | Carbon black *5 | | 5 | 5 | 5 | 5 | 5 | 5 | 5 | 5 | 5 | 5 | 5 | 5 | 5 |
| | Silica (1) *6 | | 60 | 65 | 70 | 65 | 0 | 0 | 0 | 0 | 60 | 60 | 60 | 60 | 60 |
| | Silica (2) *7 | | 0 | 0 | 0 | 0 | 60 | 70 | 60 | 70 | 0 | 0 | 0 | 0 | 0 |
| | Aluminum hydroxide *8 | | 15 | 15 | 15 | 15 | 20 | 20 | 20 | 20 | 10 | 10 | 10 | 10 | 15 |
| | Silane coupling agent (1) *9 | | 6 | 6.5 | 7 | 6.5 | 7.2 | 8.4 | 0 | 0 | 6 | 6 | 6 | 6 | 6 |
| | Silane coupling agent (2) *10 | | 0 | 0 | 0 | 0 | 0 | 0 | 6.0 | 7.0 | 0 | 0 | 0 | 0 | 0 |
| | $C_5$-based resin *11 | | 0 | 0 | 0 | 0 | 0 | 0 | 0 | 0 | 0 | 0 | 0 | 15 | 10 |
| | $C_5/C_9$-based resin *12 | | 10 | 10 | 10 | 10 | 10 | 10 | 20 | 20 | 15 | 15 | 15 | 0 | 0 |
| | Zinc salt of fatty acid *13 | | 2 | 2 | 2 | 2 | 2 | 2 | 2 | 2 | 2 | 2 | 2 | 2 | 2 |
| | Age resistor *14 | | 1 | 1 | 1 | 1 | 1 | 1 | 1 | 1 | 1 | 1 | 1 | 1 | 1 |
| | Stearic acid | | 1 | 1 | 1 | 1 | 1 | 1 | 1 | 1 | 1 | 1 | 1 | 1 | 1 |
| | Zinc white | | 2.5 | 2.5 | 2.5 | 2.5 | 2.5 | 2.5 | 2.5 | 2.5 | 2.5 | 2.5 | 2.5 | 2.5 | 2.5 |
| | Vulcanization accelerator (1) *15 | | 0.8 | 0.8 | 0.8 | 0.8 | 0.7 | 0.7 | 1.0 | 1.0 | 0.8 | 0.8 | 0.8 | 0.8 | 0.8 |
| | Vulcanization accelerator (2) *16 | | 1.1 | 1.1 | 1.1 | 1.1 | 0.6 | 0.6 | 1.5 | 1.5 | 1.1 | 1.1 | 1.1 | 1.1 | 1.1 |
| | Vulcanization accelerator (3) *17 | | 1.0 | 1.0 | 1.0 | 1.0 | 1.9 | 1.9 | 0.5 | 0.5 | 1 | 1 | 1 | 1 | 1.0 |
| | Sulfur | | 1.9 | 1.9 | 1.9 | 1.9 | 1.9 | 1.9 | 1.9 | 1.9 | 1.9 | 1.9 | 1.9 | 1.9 | 1.9 |

(continued)

| | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 | Ex. 9 |
|---|---|---|---|---|---|---|---|---|---|---|---|---|---|---|---|
| Evaluation | Wet performance | Index | 112 | 113 | 114 | 116 | 106 | 110 | 112 | 115 | 100 | 111 | 101 | 96 | 106 |
| | Rolling resistance | Index | 99 | 98 | 97 | 100 | 106 | 97 | 95 | 92 | 100 | 90 | 97 | 96 | 91 |
| | Steering stability on dry road surface | Index | 97 | 100 | 103 | 99 | 108 | 110 | 113 | 116 | 100 | 100 | 100 | 108 | 106 |
| | Wear resistance performance | Index | 102 | 104 | 106 | 105 | 102 | 106 | 115 | 118 | 100 | 100 | 100 | 104 | 106 |

*1 natural rubber: "SIR20", produced in Indonesia
*2 modified styrene-butadiene copolymer rubber (1): modified styrene-butadiene copolymer rubber synthesized by the foregoing method, glass transition temperature (Tg) = -70°C
*3 styrene-butadiene copolymer rubber: solution-polymerized styrene-butadiene copolymer rubber, "HP755B" produced by JSR Corporation, containing 37.5 parts by mass of oil with respect to 100 parts by mass of rubber component, glass transition temperature (Tg) = -18°C
*4 modified styrene-butadiene copolymer rubber (2): modified styrene-butadiene copolymer rubber synthesized by the foregoing method, containing 37.5 parts by mass of oil with respect to 100 parts by mass of rubber component, weight-average molecular weight (Mw) = $85.2 \times 10^4$, ratio of molecular weight of $200 \times 10^4$ or more and $500 \times 10^4$ or less = 4.6%, contracting factor (g') = 0.57, glass transition temperature (Tg) = -24°C
*5 carbon black: "#78" produced by Asahi Carbon Co., Ltd.
*6 silica (1): "Nipsil AQ" produced by Tosoh Silica Corporation.
*7 silica (2): synthesized by the following method:

89 L of water and 1.70 L of sodium silicate aqueous solution ($SiO_2$: 160 g/L, molar ratio of $SiO_2/Na_2O$: 3.3) were charged into a jacketed stainless steel reaction vessel (180 L) equipped with a stirrer. The solution was then heated to 75°C. The $Na_2O$ concentration of the resultant solution was 0.015 mol/L.
The same sodium silicate aqueous solution as described above and sulfuric acid (18 mol/L) were simultaneously added dropwise to the solution at flow rates of 520 mL/min and 23 mL/min, respectively, while the temperature of the solution was maintained at 75°C. Neutralization was carried out while maintaining the $Na_2O$ concentration in the reaction solution in a range of 0.005 mol/L to 0.035 mol/L by adjusting the flow rates. The reaction solution began to grow cloudy during the reaction. After 46 minutes, the viscosity increased, yielding a gel-like solution. Addition of the sodium silicate aqueous solution and sulfuric acid was continued, and the reaction was stopped after 100 min. The silica concentration of the resultant solution was 60 g/L. The same sulfuric acid as above was again added until the pH of the solution reached 3, yielding a silicate slurry. This silicate slurry was filtrated by a filter press and then washed with water to yield a wet cake. The wet cake was then rendered into a slurry using an emulsifier and dried with a spray dryer to yield the silica (2).
The obtained silica (2) had a CTAB (specific surface area by cetyltrimethylammonium bromide adsorption) of 191 ($m^2/g$), and a BET surface area of 245 ($m^2/g$).

*8 aluminum hydroxide: "Higilite H-43M" produced by Showa Denko K.K., average particle size = 1.0 μm
*9 silane coupling agent (1): 3-[ethoxybis(3,6,9,12,15-pentaoxaoctacosane-1-yloxy)silyl]-1-propanethiol, silane coupling agent "Si363®" produced by Evonik Japan Co., Ltd.
*10 silane coupling agent (2): bis(3-triethoxysilylpropyl)tetrasulfide (average sulfur chain length: 3.7), silane coupling agent, "Si69®" produced by Evonik Japan Co., Ltd.
*11 Cs-based resin: "ESCOREZ® 1102B" produced by ExxonMobil Chemical Company
*12 $C_5/C_9$-based resin: "Quintone® G100B" produced by Zeon Corporation
*13 zinc salt of fatty acid: product number "307564" produced by Sigma- Aldrich
*14 age resistor: N-(1,3-dimethylbutyl)-N'-phenyl-p-phenylenediamine, "NOCRAC 6C" produced by Ouchi Shinko Chemical Industrial Co., Ltd.
*15 vulcanization accelerator (1): 1,3-diphenyl guanidine, "SOXINOL® D-G" produced by Sumitomo Chemical Co., Ltd. (SOXINOL is a registered trademark in Japan, other countries, or both)
*16 vulcanization accelerator (2): dibenzothiazolyl disulfide, "NOCCELER® DM-P" produced by Ouchi Shinko Chemical Industrial Co., Ltd. (NOCCELER is a registered trademark in Japan, other countries, or both)
*17 vulcanization accelerator (3): N-cyclohexyl-2-benzothiazolyl sulfenamide, "NOCCELER® CZ-G" produced by Ouchi Shinko Chemical Industrial Co., Ltd.

As can be understood from Table 1, the tires using the rubber composition according to the present disclosure were able to highly achieve all of wet performance, low rolling resistance, and steering stability on a dry road surface. Moreover, the rubber compositions of Examples had improved wear resistance performance.

INDUSTRIAL APPLICABILITY

The rubber composition according to the present disclosure is usable in tread rubber of a tire. The tire according to the present disclosure is usable as a tire for various vehicles.

## Claims

**1.** A rubber composition comprising:

a rubber component (A) containing natural rubber (A1) and a modified conjugated diene-based polymer (A2); and a thermoplastic resin (B),
wherein a content of the natural rubber (A1) in the rubber component (A) is 30 mass% or more, and
the modified conjugated diene-based polymer (A2) has a weight-average molecular weight of $20 \times 10^4$ or more and $300 \times 10^4$ or less, contains 0.25 mass% or more and 30 mass% or less of a modified conjugated diene-based polymer having a molecular weight of $200 \times 10^4$ or more and $500 \times 10^4$ or less with respect to a total amount of the modified conjugated diene-based polymer (A2), and has a contracting factor (g') of less than 0.64.

**2.** The rubber composition according to claim 1, wherein the modified conjugated diene-based polymer (A2) has a branch with a branching degree of 5 or more.

**3.** The rubber composition according to claim 1 or 2, wherein the modified conjugated diene-based polymer (A2) has

one or more coupling residual groups and conjugated diene-based polymer chains that bind to the coupling residual groups, and
the branch includes a branch in which five or more conjugated diene-based polymer chains bind to one coupling residual group.

**4.** The rubber composition according to any one of claims 1 to 3, wherein the modified conjugated diene-based polymer (A2) is represented by the following General Formula (I):

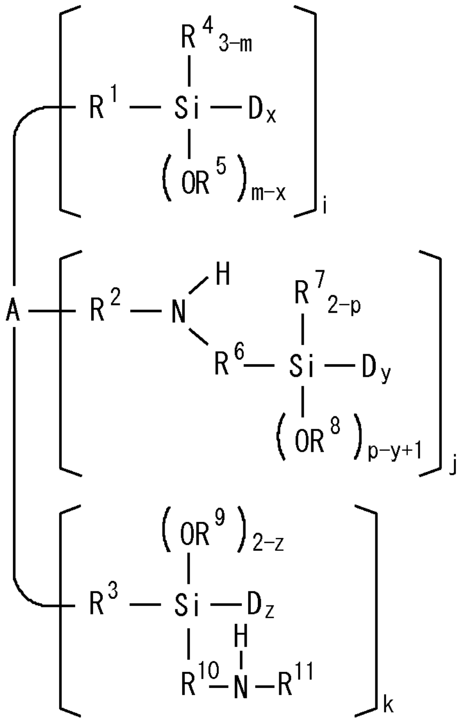

· · · · (I)

where D represents a conjugated diene-based polymer chain, $R^1$, $R^2$, and $R^3$ each independently represent a single bond or an alkylene group with a carbon number of 1 to 20, $R^4$ and $R^7$ each independently represent an alkyl group with a carbon number of 1 to 20, $R^5$, $R^8$, and $R^9$ each independently represent a hydrogen atom or an alkyl group with a carbon number of 1 to 20, $R^6$ and $R^{10}$ each independently represent an alkylene group with a carbon number of 1 to 20, $R^{11}$ represents a hydrogen atom or an alkyl group with a carbon number of 1 to 20, m and x each independently represent an integer of 1 to 3 where $x \leq m$, p represents 1 or 2, y represents an integer of 1 to 3 where $y \leq (p + 1)$, z represents an integer of 1 or 2, a plurality of each of D, $R^1$ to $R^{11}$, m, p, x, y, and z, if present, are each independent, i represents an integer of 0 to 6, j represents an integer of 0 to 6, k represents an integer of 0 to 6, (i + j + k) represents an integer of 3 to 10, $((x \times i) + (y \times j) + (z \times k))$ represents an integer of 5 to 30, and A represents a hydrocarbon group or an organic group containing at least one atom selected from the group consisting of an oxygen atom, a nitrogen atom, a silicon atom, a sulfur atom, and a phosphorus atom and not containing active hydrogen, with a carbon number of 1 to 20.

**5.** The rubber composition according to claim 4, wherein in the General Formula (I), A is represented by any of the following General Formulas (II) to (V):

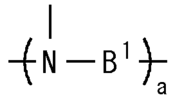

· · · · (II)

where $B^1$ represents a single bond or a hydrocarbon group with a carbon number of 1 to 20, a represents an integer of 1 to 10, and a plurality of $B^1$, if present, are each independent,

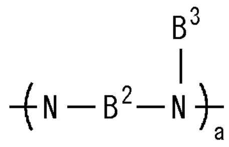

· · · · (III)

where $B^2$ represents a single bond or a hydrocarbon group with a carbon number of 1 to 20, $B^3$ represents an alkyl group with a carbon number of 1 to 20, a represents an integer of 1 to 10, a plurality of $B^2$, if present, are each independent, and a plurality of $B^3$, if present, are each independent,

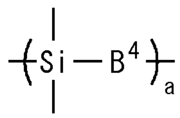

· · · · (IV)

where $B^4$ represents a single bond or a hydrocarbon group with a carbon number of 1 to 20, a represents an integer of 1 to 10, and a plurality of $B^4$, if present, are each independent,

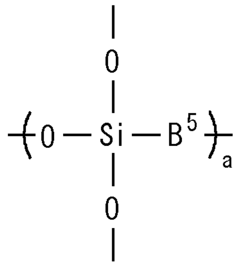

· · · · (V)

where $B^5$ represents a single bond or a hydrocarbon group with a carbon number of 1 to 20, a represents an integer of 1 to 10, and a plurality of $B^5$, if present, are each independent.

**6.** The rubber composition according to any one of claims 1 to 5, wherein the modified conjugated diene-based polymer (A2) is obtained by reacting a conjugated diene-based polymer with a coupling agent represented by the following General Formula (VI):

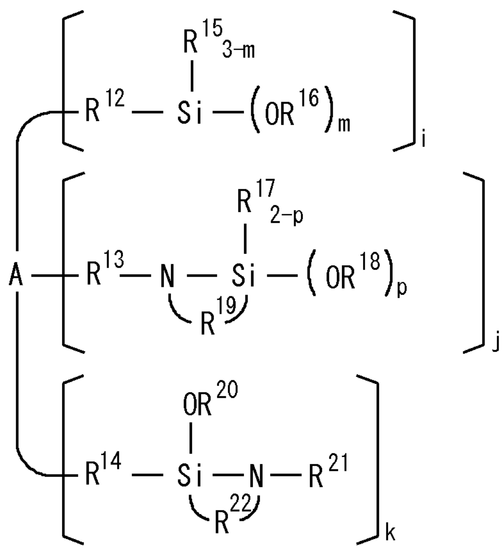

· · · · (VI)

where $R^{12}$, $R^{13}$, and $R^{14}$ each independently represent a single bond or an alkylene group with a carbon number of 1 to 20, $R^{15}$, $R^{16}$, $R^{17}$, $R^{18}$, and $R^{20}$ each independently represent an alkyl group with a carbon number of 1 to 20, $R^{19}$ and $R^{22}$ each independently represent an alkylene group with a carbon number of 1 to 20, $R^{21}$ represents an alkyl group or a trialkyl silyl group with a carbon number of 1 to 20, m represents an integer of 1 to 3, p represents

1 or 2, a plurality of each of $R^{12}$ to $R^{22}$, m, and p, if present, are each independent, i, j, and k each independently represent an integer of 0 to 6 where (i + j + k) is an integer of 3 to 10, and A represents a hydrocarbon group or an organic group containing at least one atom selected from the group consisting of an oxygen atom, a nitrogen atom, a silicon atom, a sulfur atom, and a phosphorus atom and not containing active hydrogen, with a carbon number of 1 to 20.

**7.** The rubber composition according to claim 6, wherein the coupling agent represented by the General Formula (VI) is at least one selected from the group consisting of tetrakis[3-(2,2-dimethoxy-1-aza-2-silacyclopentane)propyl] -1,3-propanediamine, tetrakis(3-trimethoxysilylpropyl)-1,3-propanediamine, and tetrakis(3-trimethoxysilylpropyl)-1,3-bisaminomethylcyclohexane.

**8.** The rubber composition according to any one of claims 1 to 7, wherein a content of the thermoplastic resin (B) is 1 part to 50 parts by mass with respect to 100 parts by mass of the rubber component (A).

**9.** The rubber composition according to any one of claims 1 to 8, wherein the thermoplastic resin (B) is at least one selected from the group consisting of a Cs-based resin, a $C_5$/$C_9$-based resin, a $C_9$-based resin, a dicyclopentadiene resin, a rosin resin, and an alkylphenol resin.

**10.** The rubber composition according to any one of claims 1 to 9, wherein the modified conjugated diene-based polymer (A2) has a glass transition temperature (Tg) of more than -50°C, and
the rubber component (A) further contains a modified conjugated diene-based polymer (A3) having a glass transition temperature (Tg) of -50°C or less.

**11.** A tire comprising
a tread rubber formed using the rubber composition according to any one of claims 1 to 10.

**INTERNATIONAL SEARCH REPORT**

International application No. PCT/JP2018/014164

A. CLASSIFICATION OF SUBJECT MATTER
Int. Cl. C08L7/00(2006.01)i, B60C1/00(2006.01)i, C08C19/25(2006.01)i, C08L15/00(2006.01)i, C08L101/00(2006.01)i

According to International Patent Classification (IPC) or to both national classification and IPC

B. FIELDS SEARCHED
Minimum documentation searched (classification system followed by classification symbols)
Int. Cl. C08L7/00-101/00, B60C1/00, C08C19/00-19/44

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | WO 2016/133154 A1 (ASAHI KASEI CORP.) 25 August 2016, claims, paragraphs [0097]-[0100], examples 7, 16, table 2 & EP 3260471 A1, claims, paragraphs [0101]-[0104], examples 7, 16, table 2 | 1-11 |
| Y | WO 2016/199779 A1 (ASAHI KASEI CORP.) 15 December 2016, claims, paragraphs [0101]-[0104], examples 3, 8, table 1 & TW 201708273 A | 1-11 |
| Y | JP 2014-205842 A (BRIDGESTONE CORP.) 30 October 2014, claims, paragraphs [0075]-[0080], examples (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20.04.2018 | 15.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/014164

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-263587 A (BRIDGESTONE CORP.) 12 November 2009, claims, paragraphs [0075]-[0080], examples (Family: none) | 1-11 |
| Y | JP 2013-159745 A (BRIDGESTONE CORP.) 19 August 2013, claims, paragraphs [0073]-[0085], examples (Family: none) | 1-11 |
| P, X | JP 2018-28018 A (ASAHI KASEI CORP.) 22 February 2018, claims, production example 2, examples 8, 17 (Family: none) | 1-11 |
| P, X | JP 2018-2986 A (ASAHI KASEI CORP.) 11 January 2018, claims, production example 8, example 13 (Family: none) | 1-11 |
| P, X | JP 2018-28047 A (ASAHI KASEI CORP.) 22 February 2018, claims, paragraphs [0088]-[0091], examples 1-4 (Family: none) | 1-11 |
| P, X | WO 2018/034217 A1 (ASAHI KASEI CORP.) 22 February 2018, claims, paragraphs [0178]-[0181], examples 1, 2, 5, 6 (Family: none) | 1-11 |
| P, X | WO 2018/034194 A1 (ASAHI KASEI CORP.) 22 February 2018, claims, paragraphs [0136]-[0139], example 4 (Family: none) | 1-11 |
| P, X | WO 2018/034195 A1 (ASAHI KASEI CORP.) 22 February 2018, claims, paragraphs [0097]-[0100], examples 1-5 (Family: none) | 1-11 |
| A | JP 2015-113437 A (ASAHI KASEI CHEMICALS CORP.) 22 June 2015, (Family: none) | 1-11 |
| A | JP 2010-275489 A (BRIDGESTONE CORP.) 09 December 2010, (Family: none) | 1-11 |
| A | JP 2009-287018 A (BRIDGESTONE CORP.) 10 December 2009, (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H5269884 A
- JP 2009256540 A
- WO 2015079703 A1

### Non-patent literature cited in the description

- **R. R. HAMPTON.** *Analytical Chemistry,* 1949, vol. 21, 923
- *Kautschuk Gummi Kunststoffe,* 1999, vol. 52 (12), 799